(19) Europäisches Patentamt
European Patent Office
Office européen des brevets

(11) **EP 4 727 026 A1**

(12) **EUROPEAN PATENT APPLICATION**
published in accordance with Art. 153(4) EPC

(43) Date of publication:
**15.04.2026 Bulletin 2026/16**

(21) Application number: **23940095.5**

(22) Date of filing: **07.06.2023**

(51) International Patent Classification (IPC):
**H04B 7/0456** (2017.01)

(52) Cooperative Patent Classification (CPC):
**H04B 7/0456; H04B 7/06**

(86) International application number:
**PCT/CN2023/099011**

(87) International publication number:
**WO 2024/250208 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **ZHANG, Zhenyu
Beijing 100085 (CN)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **INFORMATION PROCESSING METHOD AND APPARATUS, COMMUNICATION DEVICE, COMMUNICATION SYSTEM, AND STORAGE MEDIUM**

(57) The present disclosure relates to an information processing method and apparatus, a communication device, a communication system, and a storage medium. The method is executed by a terminal, and comprises: receiving first information sent by a network device, wherein the first information is used for indicating a first codeword in a codebook, the codebook is a codebook corresponding to the number of antenna ports of an uplink channel sent by the terminal, and there are three antenna ports of the uplink channel sent by the terminal; precoding the uplink channel on the basis of the first codeword; and sending the precoded uplink channel to the network device. The uplink transmission throughput is effectively ensured, and the problems of excessive complexity and overhead are also avoided.

S3201, acquiring first information

↓

S3202, precoding the uplink channel according to the first codeword

↓

S3203, sending a precoded uplink channel

FIG. 3b

**Description**

<u>**TECHNICAL FIELD**</u>

The disclosure relates to the field of wireless communication technology, specifically to an information processing method, an information processing apparatus, a communication device, a communication system, and a storage medium.

<u>**BACKGROUND**</u>

In related arts, during an existing uplink multiple input multiple output (MIMO) transmission, the R15 protocol has defined codebooks for uplink 2-port transmission and 4-port transmission. Although a 4-port codebook is defined, current commercial terminals only support 2-port transmission due to complexity and overhead limitations.

<u>**SUMMARY**</u>

Embodiments of the present disclosure provide an information processing method, an information processing apparatus, a communication device, a communication system, and a storage medium.

In a first aspect, embodiments of the present disclosure provide an information processing method. The method is performed by a terminal and includes: receiving first information sent by a network device, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; precoding the uplink channel according to the first codeword; and sending a precoded uplink channel to the network device.

In a second aspect, embodiments of the present disclosure provide an information processing method. The method is performed by a network device and includes: sending first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; and receiving an uplink channel sent by the terminal and precoded according to the first codeword.

In a third aspect, embodiments of the present disclosure provide an information processing method. The method is configured in a communication system including a terminal an a network device, and includes: sending, by the network device, first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; precoding, by the terminal, the uplink channel according to the first codeword; and sending, by the terminal, a precoded uplink channel to the network device.

In a fourth aspect, embodiments of the present disclosure provide a first information processing apparatus. The apparatus includes: a receiving module, configured to receive first information sent by a network device, in which the first information indicates a first codeword in a codebook, the codebook is a codebook corresponding to a numerical count of antenna ports for sending an uplink channel by a terminal, and the numerical count of antenna ports of the terminal for sending the uplink channel is 3; a processing module, configured to precode the uplink channel according to the first codeword; and a sending module, configured to send a precoded uplink channel to the network device.

In a fifth aspect, embodiments of the present disclosure provide a second information processing apparatus. The apparatus includes: a sending module, configured to send first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; and a receiving module, configured to receive an uplink channel sent by the terminal and precoded according to the first codeword.

In a sixth aspect, embodiments of the present disclosure provide a communication device. The communication device includes one or more processors. The one or more processors are configured to call instructions to enable the communication device to perform the information processing method as described in the first aspect or the second aspect.

In a seventh aspect, embodiments of the present disclosure provide a communication system. The communication system includes a terminal and a network device. The terminal is configured to implement the information processing method as described in the first aspect of embodiments of the present disclosure. The network device is configured to implement the information processing method as described in the second aspect of embodiments of the present disclosure.

In an eighth aspect, embodiments of the present disclosure provide a storage medium. The storage medium stores instructions which, when running on a communication device, cause the communication device to perform the information processing method as described in optional implementations of the first aspect or the second aspect or the third aspect.

It effectively ensures a throughput of an uplink transmission while avoiding problems of excessive complexity and overhead.

## BRIEF DESCRIPTION OF THE DRAWINGS

In order to more clearly illustrate the technical solution in the embodiments of the present disclosure, the accompanying drawings required for describing the embodiments are introduced below. The following accompanying drawings are only some embodiments of the present disclosure, without specific limitations on the scope of protection of the present disclosure.

FIG. 1a is a schematic diagram illustrating an architecture of a communication system according to an embodiment of the present disclosure.

FIG. 1b is a schematic diagram illustrating an antenna arrangement of an uplink 3-port terminal according to an embodiment of the present disclosure of the present disclosure.

FIG. 2 is a schematic diagram illustrating an interaction of an information processing method according to an embodiment of the present disclosure.

FIG. 3a is a flowchart illustrating an information processing method according to an embodiment of the present disclosure.

FIG. 3b is a flowchart illustrating an information processing method according to an embodiment of the present disclosure.

FIG. 4a is a flowchart illustrating an information processing method according to an embodiment of the present disclosure.

FIG. 4b is a flowchart illustrating an information processing method according to an embodiment of the present disclosure.

FIG. 5 is a flowchart illustrating an information processing method according to an embodiment of the present disclosure.

FIG. 6a is a schematic diagram illustrating an architecture of a second information processing apparatus according to an embodiment of the present disclosure.

FIG. 6b is a schematic diagram illustrating an architecture of a second information processing apparatus according to an embodiment of the present disclosure.

FIG. 7a is a schematic diagram illustrating an architecture of a communication device according to an embodiment of the present disclosure.

FIG. 7b is a schematic diagram illustrating an architecture of a chip according to an embodiment of the present disclosure.

## DETAILED DESCRIPTION

A current uplink 4-port codebook cannot be applied on a large scale due to complexity and overhead limitations, while an uplink 2-port codebook cannot meet current usage requirements of a throughput of an uplink transmission.

Embodiments of the present disclosure provide an information processing method, an information processing apparatus, a communication device, a communication system, and a storage medium.

In a first aspect, embodiments of the present disclosure provide an information processing method. The method is performed by a terminal and includes: receiving first information sent by a network device, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; precoding the uplink channel according to the first codeword; and sending a precoded uplink channel to the network device.

In the above embodiment, a 3-port terminal receives the first information sent by the network device to determine the first codeword configured for the terminal by the network device, and then implements precoding the uplink channel based on the first codeword, so that the uplink 3-port terminal may implement uplink transmission based on the codebook corresponding to the numerical count of antenna ports being 3, effectively ensuring a throughput of the uplink transmission while avoiding problems of excessive complexity and overhead.

In combination with some embodiments of the first aspect, the antenna ports of the terminal for sending the uplink channel are configured in a single polarization arrangement.

In the above embodiment, the 3 uplink antenna ports are configured in the single polarization arrangement, which may enable the terminal to effectively form beams.

In combination with some embodiments of the first aspect, the codebook includes at least one of: a codeword with 1 layer, a codeword with 2 layers, or a codeword with 3 layers.

In the above embodiment, configuring codewords with different layer numbers in the codebook may effectively ensure comprehensiveness of the codewords in the codebook, which may enable the network device to configure better codewords according to an actual situation of the terminal, and effectively ensure the throughput of the uplink transmission.

In combination with some embodiments of the first aspect, the codebook includes at least one of: a fully coherent codebook, a partially coherent codebook, or a non-coherent codebook.

In the above embodiment, by configuring the fully coherent codebook, the partially coherent codebook, and the non-coherent codebook, terminals with different coherent types may all reliably implement the uplink transmission for the three antenna ports, and it may effectively ensure reliability of the uplink transmission.

In combination with some embodiments of the first aspect, a codeword in the fully coherent codebook is determined based on a discrete Fourier transform (DFT) vector, and the DFT vector is denoted as:

$$v_l = \begin{bmatrix} 1 & e^{j\frac{2\pi l}{O_1 N_1}} & \cdots & e^{j\frac{2\pi l(N_1-1)}{O_1 N_1}} \end{bmatrix}^T,$$

where $N_1$ denotes a numerical count of ports in a horizontal dimension and is equal to 3, $O_1$ denotes a numerical count of oversampling times in the horizontal dimension and is a pre-configured positive integer, $l$ denotes an integer greater than or equal to zero, j denotes a square root of -1, and a superscript T denotes transpose of a matrix.

In the above embodiment, the codeword in the fully coherent codebook is determined based on the discrete Fourier transform, on the basis of a basic principle of the DFT codebook, it may effectively ensure orthogonality between layers of the 3-port fully coherent codebook, and ensure the reliability of the uplink transmission.

In combination with some embodiments of the first aspect, DFT vectors corresponding to respective layers of codewords in the fully coherent codebook are orthogonal to each other.

In the above embodiment, the codewords in the fully coherent codebook are configured as the respective layers having the DFT vectors orthogonal to each other, which may effectively ensure the reliability of the 3-port fully coherent uplink transmission.

In combination with some embodiments of the first aspect, the fully coherent codebook includes at least one of:

$$W_{i_{1,1}}^{(1)} = \frac{1}{\sqrt{P}} \begin{bmatrix} v_{i_{1,1}} \end{bmatrix};$$

$$W_{i_{1,1},i_{1,1}+O_1}^{(2)} = \frac{1}{\sqrt{2P}} \begin{bmatrix} v_{i_{1,1}} & v_{i_{1,1}+O_1} \end{bmatrix};$$

$$W_{i_{1,1},i_{1,1}+2O_1}^{(2)} = \frac{1}{\sqrt{2P}} \begin{bmatrix} v_{i_{1,1}} & v_{i_{1,1}+2O_1} \end{bmatrix};$$

or

$$W_{i_{1,1},i_{1,1}+O,i_{1,1}+2O_1}^{(3)} = \frac{1}{\sqrt{3P}} \begin{bmatrix} v_{i_{1,1}} & v_{i_{1,1}+O_1} & v_{i_{1,1}+2O_1} \end{bmatrix};$$

where $W$ denotes the codeword in the codebook, a superscript of $W$ denotes a layer number of a corresponding codeword, $i_{1,1} = 0,1, ..., N_1 O_1 - 1$, $P = N_1 N_2$ denotes a total number of ports and is equal to 3.

In the above embodiment, the codeword of each layer in the fully coherent codebook is determined based on the above expression, which may effectively ensure orthogonality between the layers of the codewords in the fully coherent codebook and ensure the reliability of the uplink transmission.

In combination with some embodiments of the first aspect, the partially coherent codebook includes at least one of:

$$W^{(1)} = \begin{bmatrix} A_0 \\ 0 \end{bmatrix}; \quad W^{(2)} = \begin{bmatrix} A_1 & 0 \\ 0 & A_2 \end{bmatrix}; \quad \text{or} \quad W^{(3)} = \begin{bmatrix} A_3 & 0 \\ 0 & A_4 \end{bmatrix};$$

where W denotes the codeword in the codebook, and a superscript of W denotes a layer number of a corresponding codeword;

$A_0$ is any one of 2-port 1-layer fully coherent codewords;

one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;

one of $A_3$ or $A_4$ is any one of 2-port 2-layer fully coherent codewords, and the other one of $A_3$ or $A_4$ is 1.

In the above embodiment, a part of elements of the codewords in the partially coherent codebook to 2-port fully coherent codewords, which may effectively ensure that the codewords in the codebook have two ports that are coherent, while the other port is non-coherent to the two ports, and ensure the reliability of uplink partially coherent transmission.

In combination with some embodiments of the first aspect, the 2-port 1-layer fully coherent codeword includes at least one of:

$$\frac{1}{\sqrt{2}}\begin{bmatrix}1\\1\end{bmatrix}; \quad \frac{1}{\sqrt{2}}\begin{bmatrix}1\\-1\end{bmatrix}; \quad \frac{1}{\sqrt{2}}\begin{bmatrix}1\\j\end{bmatrix}; \text{ or } \quad \frac{1}{\sqrt{2}}\begin{bmatrix}1\\-j\end{bmatrix}.$$

In the above embodiment, a 3-port 1-layer or 3-port 2-layer codeword may be determined based on the above 2-port 1-layer fully coherent codeword, which may effectively reduce complexity for determining the codeword in the 3-port codebook.

In combination with some embodiments of the first aspect, the 2-port 2-layer fully coherent codeword includes at least one of:

$$\frac{1}{\sqrt{2}}\begin{bmatrix}1 & 1\\1 & -1\end{bmatrix}; \text{ or } \quad \frac{1}{\sqrt{2}}\begin{bmatrix}1 & 1\\j & -j\end{bmatrix}.$$

In the above embodiment, a 3-port 3-layer codeword may be determined based on the above 2-port 2-layer fully coherent codeword, which may effectively reduce the complexity for determining the codeword in the 3-port codebook.

In combination with some embodiments of the first aspect, a codeword in the non-coherent codebook is a first matrix, and one antenna port is selected for each layer of the first matrix, and antenna ports selected for respective layers are different from each other.

In the above embodiment, the codeword in the non-coherent codebook is configured as that one antenna port is selected for each layer, and the antenna ports selected for the respective layers are different from each other, which may effectively ensure non-coherent transmission between three ports.

In combination with some embodiments of the first aspect, the method includes: sending second information to the network device, in which the second information indicates a coherence type for the terminal, and the coherence type is used for the network device to determine the first codeword.

In the above embodiment, the coherence type for the terminal is reported to the network device to enabled the network device to determine the first codeword based on the coherence type for the terminal, which may effectively ensure that the network device may configure codewords with a best performance for terminals with different coherence types, and effectively ensure the reliability of the 3-port uplink transmission.

In combination with some embodiments of the first aspect, the coherence type is a fully coherent type, the first codeword is a codeword in the fully coherent codebook, or the first codeword is a codeword in any one of: the fully coherent codebook, the partially coherent codebook, or the non-coherent codebook; and/or the coherence type is a partially coherent type, the first codeword is a codeword in the partially coherent codebook, or the first codeword is a codeword in any one of: the partially coherent codebook or the non-coherent codebook; and/or the coherent type is a non-coherent type, and the first codeword is a codeword in the non-coherent codebook.

In the above embodiment, the network device may determine the first codeword in the corresponding codebook according to the different coherence type for the terminal, to enable the terminal to perform precoding according to the first codeword, which may effectively ensure that the terminals with the different coherence types may reliably perform the uplink transmission.

In a second aspect, embodiments of the present disclosure provide an information processing method. The method is performed by a network device and includes: sending first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; and receiving an uplink channel sent by the terminal and precoded according to the first codeword.

In combination with some embodiments of the second aspect, the antenna ports of the terminal for sending the uplink channel are configured in a single polarization arrangement.

In combination with some embodiments of the second aspect, the codebook includes at least one of: a codeword with 1 layer, a codeword with 2 layers, or a codeword with 3 layers.

In combination with some embodiments of the second aspect, the codebook includes at least one of: a fully coherent codebook, a partially coherent codebook, or a non-coherent codebook.

In combination with some embodiments of the second aspect, a codeword in the fully coherent codebook is determined based on a DFT vector, and the DFT vector is denoted as:

$$v_l = \begin{bmatrix} 1 & e^{j\frac{2\pi l}{O_1 N_1}} & \dots & e^{j\frac{2\pi l(N_1-1)}{O_1 N_1}} \end{bmatrix}^T,$$

where $N_1$ denotes a numerical count of ports in a horizontal dimension and is equal to 3, $O_1$ denotes a numerical count of oversampling times in the horizontal dimension and is a pre-configured positive integer, $l$ denotes an integer greater than or equal to zero, $j$ denotes a square root of -1, and a superscript T denotes transpose of a matrix.

In combination with some embodiments of the second aspect, DFT vectors corresponding to respective layers of codewords in the fully coherent codebook are orthogonal to each other.

In combination with some embodiments of the second aspect, the fully coherent codebook includes at least one of:

$$W_{i_{1,1}}^{(1)} = \frac{1}{\sqrt{P}} \begin{bmatrix} v_{i_{1,1}} \end{bmatrix};$$

$$W_{i_{1,1},i_{1,1}+O_1}^{(2)} = \frac{1}{\sqrt{2P}} \begin{bmatrix} v_{i_{1,1}} & v_{i_{1,1}+O_1} \end{bmatrix};$$

$$W_{i_{1,1},i_{1,1}+2O_1}^{(2)} = \frac{1}{\sqrt{2P}} \begin{bmatrix} v_{i_{1,1}} & v_{i_{1,1}+2O_1} \end{bmatrix};$$

or

$$W_{i_{1,1},i_{1,1}+O,i_{1,1}+2O_1}^{(3)} = \frac{1}{\sqrt{3P}} \begin{bmatrix} v_{i_{1,1}} & v_{i_{1,1}+O_1} & v_{i_{1,1}+2O_1} \end{bmatrix};$$

where $W$ denotes the codeword in the codebook, a superscript of $W$ denotes a layer number of a corresponding codeword, $i_{1,1} = 0,1, ..., N_1 O_1 - 1$, $P = N_1 N_2$ denotes a total number of ports and is equal to 3.

In combination with some embodiments of the second aspect, the partially coherent codebook includes at least one of:

$$W^{(1)} = \begin{bmatrix} A_0 \\ 0 \end{bmatrix}; \quad W^{(2)} = \begin{bmatrix} A_1 & 0 \\ 0 & A_2 \end{bmatrix}; \quad \text{or} \quad W^{(3)} = \begin{bmatrix} A_3 & 0 \\ 0 & A_4 \end{bmatrix};$$

where $W$ denotes the codeword in the codebook, and a superscript of $W$ denotes a layer number of a corresponding codeword;

$A_0$ is any one of 2-port 1-layer fully coherent codewords;

one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;

one of $A_3$ or $A_4$ is any one of 2-port 2-layer fully coherent codewords, and the other one of $A_3$ or $A_4$ is 1.

In combination with some embodiments of the second aspect, the 2-port 1-layer fully coherent codeword includes at least one of:

$$\frac{1}{\sqrt{2}} \begin{bmatrix} 1 \\ 1 \end{bmatrix}; \quad \frac{1}{\sqrt{2}} \begin{bmatrix} 1 \\ -1 \end{bmatrix}; \quad \frac{1}{\sqrt{2}} \begin{bmatrix} 1 \\ j \end{bmatrix}; \quad \text{or} \quad \frac{1}{\sqrt{2}} \begin{bmatrix} 1 \\ -j \end{bmatrix}.$$

In combination with some embodiments of the second aspect, the 2-port 2-layer fully coherent codeword includes at least one of:

$$\frac{1}{\sqrt{2}}\begin{bmatrix}1 & 1\\ 1 & -1\end{bmatrix}; \text{ or } \frac{1}{\sqrt{2}}\begin{bmatrix}1 & 1\\ j & -j\end{bmatrix}.$$

In combination with some embodiments of the second aspect, a codeword in the non-coherent codebook is a first matrix, and one antenna port is selected for each layer of the first matrix, and antenna ports selected for respective layers are different from each other.

In combination with some embodiments of the second aspect, the method includes:

receiving second information sent by the terminal, in which the second information indicates a coherent type for the terminal; and
determining the first codeword according to the coherence type.

In combination with some embodiments of the second aspect, the coherence type is a fully coherent type, the first codeword is a codeword in the fully coherent codebook, or the first codeword is a codeword in any one of: the fully coherent codebook, the partially coherent codebook, or the non-coherent codebook; and/or the coherence type is a partially coherent type, the first codeword is a codeword in the partially coherent codebook, or the first codeword is a codeword in any one of: the partially coherent codebook or the non-coherent codebook; and/or the coherent type is a non-coherent type, and the first codeword is a codeword in the non-coherent codebook.

In a third aspect, embodiments of the present disclosure provide an information processing method. The method is configured in a communication system including a terminal an a network device, and includes: sending, by the network device, first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; precoding, by the terminal, the uplink channel according to the first codeword; and sending, by the terminal, a precoded uplink channel to the network device.

In a fourth aspect, embodiments of the present disclosure provide a first information processing apparatus. The apparatus includes: a receiving module, configured to receive first information sent by a network device, in which the first information indicates a first codeword in a codebook, the codebook is a codebook corresponding to a numerical count of antenna ports for sending an uplink channel by a terminal, and the numerical count of antenna ports of the terminal for sending the uplink channel is 3; a processing module, configured to precode the uplink channel according to the first codeword; and a sending module, configured to send a precoded uplink channel to the network device.

In a fifth aspect, embodiments of the present disclosure provide a second information processing apparatus. The apparatus includes: a sending module, configured to send first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3; and a receiving module, configured to receive an uplink channel sent by the terminal and precoded according to the first codeword.

In a sixth aspect, embodiments of the present disclosure provide a communication device. The communication device includes one or more processors. The one or more processors are configured to call instructions to enable the communication device to perform the information processing method as described in the first aspect or the second aspect.

In a seventh aspect, embodiments of the present disclosure provide a storage medium. The storage medium stores instructions which, when running on a communication device, cause the communication device to perform the method as described in optional implementations of the first aspect or the second aspect.

In an eighth aspect, embodiments of the present disclosure provide a program product which, when performed by a communication device, causes the communication device to perform the method as described in the optional implementation of the first aspect or the second aspect or the third aspect.

In a ninth aspect, embodiments of the present disclosure provide a computer program which, when performed on a computer, causes the computer to perform the method as described in as described in the optional implementation of the first aspect or the second aspect or the third aspect.

In a tenth aspect, embodiments of the present disclosure provide a communication system. The communication system includes a terminal and a network device. The terminal is configured to implement the method as described in the optional implementation of the first aspect. The network device is configured to implement the method as described in the optional implementation of the second aspect.

It is noted that the first information processing apparatus, the second information processing apparatus, the communication device, the communication system, the computer-readable storage medium, and the computer program product are all configured to perform the method according to the embodiments of the present disclosure. Therefore, for beneficial effects that may be achieved, reference may be made to the beneficial effects of the corresponding method, and details are not repeated herein.

The present disclosure proposes an information processing method, a device and a storage medium. In some embodiments, terms such as information processing method, information sending method and communication method, etc. may be replaced with each other, terms such as information processing apparatus, information sending apparatus and communication apparatus, etc. may be replaced with each other, and terms such as communication system and information processing system, etc. may be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and respective steps may be arbitrarily combined. For example, a solution after removing some steps in a certain embodiment can also be implemented as an independent embodiment, and an order of the steps in a certain embodiment may be arbitrarily exchanged. In addition, optional implementations in a certain embodiment may be arbitrarily combined. In addition, respective embodiments may be arbitrarily combined with other, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, a noun after the article may be understood as a singular expression or a plural expression.

In embodiments of the present disclosure, "a plurality of" refers to two or more.

In some embodiments, the terms "at least one of", "one or more", "a plurality of", "multiple", etc. may be used interchangeably.

In embodiments of the present disclosure, descriptions such as "at least one of A or B", "A and/or B", "in a case, A; in another case, B", "in response to a case, A; in response to another case, B", etc. may include the following technical solutions according to situations: executing A (independently of B) in some embodiments; executing B (independently of A) in some embodiments; executing one selected from A and B in some embodiments (selectively executing A or B) in some embodiments; and executing A and B (both A and B) in some embodiments. When there are more branches such as A, B, C, etc., the above is applicable.

In embodiments of the present disclosure, descriptions such as "A or B" etc. may include the following technical solutions according to situations: executing A (independently of B) in some embodiments; executing B (independently of A) in some embodiments; executing one selected from A and B in some embodiments (selectively executing A or B) in some embodiments. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, terms such as "in response to ...", "in response to determining ...", "in a case of ...", "upon", "when", "while", "if", etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names mentioned in the embodiments, and terms such as "apparatus", "equipment", "device", "circuit", "network element", "node", "function", "unit", "section", "system", "network", "chip", "chip system", "entity", and "subject" and the like may be used interchangeably.

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the present disclosure can also be applied to a structure in which communication between the access network device, the core network device, or the network device and the terminal is replaced by communication between multiple terminals (for example, also be referred to as device-to-device (D2D), vehicle-to-everything (V2X), etc.). In this case, the terminal can also be configured to have a structure that has all or part of the functions of the access network device. In addition, language such as "uplink" and "downlink" can also be replaced by the language corresponding to the communication between the terminals (for example, "side"). For example, an uplink channel, a downlink channel, etc. may be replaced by a side channel, and an uplink, a downlink, etc. may be replaced by a side link.

In some embodiments, the terminal may be replaced by the access network device, the core network device, or the network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

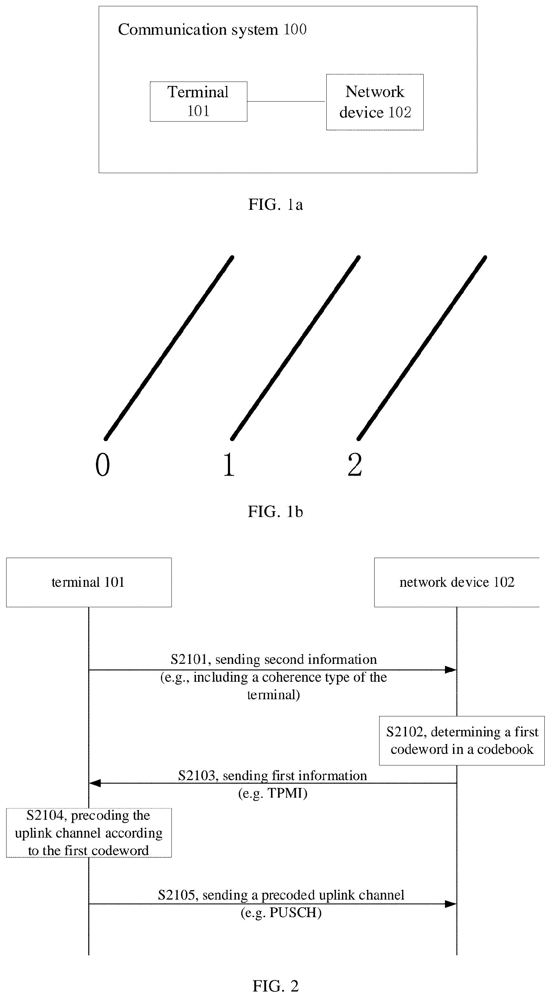

FIG. 1a is a schematic diagram illustrating an architecture of a communication system according to an embodiment of the present disclosure. As illustrated in FIG. 1a, the communication system 100 may include a terminal 101 and a network device 102.

In some embodiments, the network device 102 may include at least one of: an access network (RAN) device or a core network device.

In some embodiments, the communication system 100, may be, for example, a long-term evolution (LTE) system, a 5th generation (5G) mobile communication system, a 5G new radio (NR) system, and other future communication systems, which is not limited herein.

In some embodiments, the terminal 101 (also referred to as user equipment, UE), for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, which is not limited herein.

In some embodiments, the access network device may be, for example, a node or device that accesses the terminal 101 to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, which is not limited herein.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, which is not limited herein.

In some embodiments, in some embodiments, the core network device may be one device including one or more network elements, or may be a plurality of devices or a device group, each including all or part of the one or more network elements. The network element may be virtual or physical. The core network may include, for example, at least one of an evolved packet core (EPC), a 5G core network (5GCN), and a next generation core (NGC).

It may be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the subjects shown in FIG. 1a, but are not limited thereto. The subjects shown in FIG. 1a are examples, and the communication system may include all or part of the subjects in FIG. 1a, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In the related art, during an uplink MIMO transmission, codebooks for uplink 2-port transmission and 4-port transmission are defined. Although a 4-port codebook is defined, current most commercial terminals only support 2-port transmission due to complexity and overhead limitations.

In some embodiments, in order to further improve a throughput of an uplink transmission, a numerical count of ports of the terminal for the uplink transmission may be further increased, for example, increased to 3 ports. However, in the related art, uplink 3-port transmission has not been studied yet, and issues such as an antenna arrangement, a 3-port codebook, and a 3-port SRS resource still need to be further studied.

In some embodiments, a dual-polarized linear array is generally used in an uplink 4-port terminal, in which port 0 and port 1 form a beam, port 2 and port 3 form a beam, and an uplink 4-port fully coherent codebook uses a downlink Type I 4-port codebook in the R15, and limits parameters of the codebook.

In some embodiments, when the terminal adopts 3 ports, the dual-polarized antenna arrangement makes the terminal difficult to form the beam, therefore, a single-polarized antenna arrangement may be adopted. In an example, as shown in FIG. 1b, antenna azimuth angle of ports 0, 1, and 2 are consistent and are all in a horizontal dimension.

FIG. 2 is a schematic diagram illustrating an interaction of an information processing method according to an embodiment. As illustrated in FIG. 2, an embodiment of the present disclosure relates to an information processing method configured in a communication system 100. The method includes the following steps.

At step S2101, a terminal sends second information to a network device.

In some embodiments, the network device receives the second information sent by the terminal.

In some embodiments, a numerical count of antenna ports of the terminal for sending an uplink channel is 3. In an example, the antenna ports of the terminal for sending the uplink channel are configured in a single polarization arrangement.

In some embodiments, the second information indicates a coherence type for the terminal. In an example, the second information may also be used to instruct the network device to determine a first codeword. In an example, the second information is used to instruct the network device to determine the first codeword according to the coherence type for the terminal. In an example, the coherence type may be used for the network device to determine the first codeword. In an example, the first codeword may be used for the terminal to precode the uplink channel. In an example, the uplink channel may be, for example, a physical uplink shared channel (PUSCH).

In some embodiments, the coherence type for the terminal may be any one of: a fully coherent type, a partially coherent type, and a non-coherent type. In an example, the coherence type of a fully coherent terminal is the fully coherent type. In an example, the coherence type of a partially coherent terminal is the partially coherent type. In an example, the coherence type of a non-coherent terminal is the non-coherent type.

At step S2102, the network device determines the first codeword in a codebook.

In some embodiments, the codebook is a codebook corresponding to the numerical count of antenna ports of the terminal for sending the uplink channel. For example, the codebook is a codebook corresponding to the numerical count of antenna ports being 3.

In some embodiments, the codebook corresponding to the numerical count of antenna ports for sending the uplink channel being 3 includes at least one of: a codeword with 1 layer, a codeword with 2 layers, or a codeword with 3 layers.

In some embodiments, the term "codeword" may also be referred to as "precoding matrix". In an example, a numerical count of layers of the codeword may also refer to a rank of a precoding matrix. In an example, the codebook may include at least one of: a precoding matrix with a rank being 1, a precoding matrix with a rank being 2, or a precoding matrix with a rank being 3.

In some embodiments, the codebook corresponding to the numerical count of antenna ports for sending the uplink channel being 3 includes at least one of: a fully coherent codebook, a partially coherent codebook, and a non-coherent codebook.

For example, the codebook corresponding to the numerical count of antenna ports being 3 may include only the fully coherent codebook, and the fully coherent codebook includes only the codeword with 1 layer. Or, the codebook corresponding to the numerical count of antenna ports being 3 may include the fully coherent codebook and the partially coherent codebook, the fully coherent codebook includes codewords with 1 layer to 3 layers, and the partially coherent codebook includes only codewords with 1 layer and 2 layers. Or, the codebook corresponding to the numerical count of antenna ports being 3 may include the fully coherent codebook, the partially coherent codebook, and the non-coherent codebook, each of which includes the codewords with 1 layer to 3 layers.

In some embodiments, the fully coherent codebook may also be referred to as a set of codewords for fully coherent transmission. Or, the partially coherent codebook may also be referred to as a set of codewords for partially coherent transmission. Or, the non-coherent codebook may also be referred to as a set of codewords for non-coherent transmission.

It is noted that the terminal may not calibrate all of the antenna ports to enable coherent transmission. In the related arts, the following three types of antenna coherent transmission capabilities for the terminal are defined: full coherence, which means that all of the antenna ports of the terminal may perform the coherent transmission; partially coherence, which means that antenna ports in the same coherent transmission group of the terminal may perform the coherent transmission, but antenna ports in different coherent transmission groups cannot perform the coherent transmission; or non-coherence, which means that no antenna port of the terminal may perform the coherent transmission.

In some embodiments, the network device may determine the first codeword based on the coherence type for the terminal. Or, the network device may also determine the first codeword based on other information, such as a modulation capability of the terminal or a reference signal sent by the terminal, etc., which is not limited in the embodiments of the present disclosure.

In some embodiments, the coherence type for the terminal is a fully coherent type, the first codeword is a codeword in the fully coherent codebook, or the first codeword is a codeword in any one of: the fully coherent codebook, the partially coherent codebook, or the non-coherent codebook; and/or the coherence type for the terminal is a partially coherent type, the first codeword is a codeword in the partially coherent codebook, or the first codeword is a codeword in any one of: the partially coherent codebook or the non-coherent codebook; and/or the coherence type for the terminal is a non-coherent type, and the first codeword is a codeword in the non-coherent codebook.

In an example, the network device determines that the coherence type for the terminal is the fully coherent type, and the first codeword may be determined from the fully coherent codebook. In an example, the network device determines that the coherence type for the terminal is the partially coherent type, the first codeword may be determined from the partially coherent codebook. In an example, the network device determines that the coherence type for the terminal is the non-coherent type, the first codeword may be determined from the non-coherent codebook.

In an example, the network device determines that the coherence type for the terminal is the fully coherent type, the first codeword may be determined from the fully coherent codebook, the partially coherent codebook, or the non-coherent codebook. In an example, the network device determines that the coherence type for the terminal is the partially coherent type, the first codeword may be determined from the partially coherent codebook or the non-coherent codebook. In an example, the network device determines that the coherence type for the terminal is the non-coherent type, the first codeword may be determined from the non-coherent codebook.

In some embodiments, the network device may first determine the first codebook corresponding to the coherence type for the terminal according to the coherence type for the terminal. For example, the coherence type for the terminal is the fully coherent type, the first codebook may include one or more of the fully coherent codebook, the non-coherent codebook, or the partially coherent codebook, or the first codebook may only include the fully coherent codebook. Further, the network device may select a codeword from the first codebook as the first codeword.

In some embodiments, the network device may receive the reference signal sent by the terminal, such as a sounding reference signal (SRS), and acquire channel state information based on the reference signal to obtain an optimal first codeword.

In some embodiments, the codeword in the fully coherent codebook is determined based on a DFT vector, and the DFT vector is denoted as:

$$v_l = \begin{bmatrix} 1 & e^{j\frac{2\pi l}{O_1 N_1}} & \dots & e^{j\frac{2\pi l(N_1-1)}{O_1 N_1}} \end{bmatrix}^T$$, where $N_1$ denotes a numerical count of ports in a horizontal dimension and is equal to 3, $O_1$ denotes a numerical count of oversampling times in the horizontal dimension and is a pre-configured positive integer, $l$ denotes an integer greater than or equal to zero, j denotes a square root of - 1, a superscript T denotes transpose of a matrix, and e denotes a natural constant.

In an example, the DFT vector may also be referred to as a DFT beam. In an example, the DFT beam may be represented as the DFT vector.

In an example, a value of $O_1$ may be 1, 2, 3, or 4, etc., which is not limited in the embodiments of the present disclosure. In an example, a value of $l$ may be, for example, any one of 0, 1, 2, ..., $N_1 O_1$ - 1.

In some embodiments, DFT vectors corresponding to respective layers of codewords in the fully coherent codebook are orthogonal to each other.

It is worth noting that, with reference to the above embodiment, the DFT vector may be represented as a matrix with 1 layer, that is, a matrix with only one column. The codeword in the fully coherent codebook may be a matrix with 1 layer, or 2 layers, or 3 layers, and each layer may be represented as one DFT vector, and DFT vectors represented by respective columns may be orthogonal to each other.

Illustratively, the fully coherent codebook may include, for example, the codeword: $\begin{bmatrix} 1 & 1 \\ 1 & e^{j\frac{2\pi}{3}} \\ 1 & e^{j\frac{4\pi}{3}} \end{bmatrix}$, where the

codeword includes two layers, each layer in the codeword is the DFT vector, if $O_1$ is equal to 1 and $N_1$ is equal to 3, a first layer is a DFT vector corresponding to a situation of $l$ being equal to 0, and a second layer is a DFT vector corresponding to a situation of $l$ being equal to 1, and DFT vectors of the two layers are orthogonal to each other.

In some embodiments, the fully coherent codebook includes at least one of:

$$W_{i_{1,1}}^{(1)} = \frac{1}{\sqrt{P}}\begin{bmatrix} v_{i_{1,1}} \end{bmatrix};$$

$$W_{i_{1,1},i_{1,1}+O_1}^{(2)} = \frac{1}{\sqrt{2P}}\begin{bmatrix} v_{i_{1,1}} & v_{i_{1,1}+O_1} \end{bmatrix};$$

$$W_{i_{1,1},i_{1,1}+2O_1}^{(2)} = \frac{1}{\sqrt{2P}}\begin{bmatrix} v_{i_{1,1}} & v_{i_{1,1}+2O_1} \end{bmatrix};$$

or

$$W_{i_{1,1},i_{1,1}+O,i_{1,1}+2O_1}^{(3)} = \frac{1}{\sqrt{3P}}\begin{bmatrix} v_{i_{1,1}} & v_{i_{1,1}+O_1} & v_{i_{1,1}+2O_1} \end{bmatrix};$$

where $W$ denotes the codeword in the codebook, a superscript of $W$ denotes a layer number of a corresponding codeword, $i_{1,1} = 0, 1, ..., N_1 O_1$ - 1, $P = N_1 N_2$ denotes a total number of ports and is equal to 3.

For example, the fully coherent codebook includes only the codeword with 1 layer, and the fully coherent codebook may include only a codeword corresponding to $W_{i_{1,1}}^{(1)} = \frac{1}{\sqrt{P}}\begin{bmatrix} v_{i_{1,1}} \end{bmatrix}$. The fully coherent codebook includes only the codeword with 2 layers, and the fully coherent codebook may include a codeword corresponding to

$$W_{i_{1,1},i_{1,1}+O_1}^{(2)} = \frac{1}{\sqrt{2P}}\begin{bmatrix} v_{i_{1,1}} & v_{i_{1,1}+O_1} \end{bmatrix}$$, and/or a codeword corresponding to

$$W_{i_{1,1},i_{1,1}+2O_1}^{(2)} = \frac{1}{\sqrt{2P}}\begin{bmatrix} v_{i_{1,1}} & v_{i_{1,1}+2O_1} \end{bmatrix}.$$

In an embodiment, the fully coherent codebook includes codewords with 1 layer to 3 layers. When the numerical count of oversampling times $O_1$ the horizontal dimension is set as 1, the fully coherent codebook may be as shown in Table 1 below:

Table 1

| Rank=1 | $\frac{1}{\sqrt{3}}\begin{bmatrix}1\\1\\1\end{bmatrix}$ | $\frac{1}{\sqrt{3}}\begin{bmatrix}1\\e^{j\frac{2\pi}{3}}\\e^{j\frac{4\pi}{3}}\end{bmatrix}$ | $\frac{1}{\sqrt{3}}\begin{bmatrix}1\\e^{j\frac{4\pi}{3}}\\e^{j\frac{2\pi}{3}}\end{bmatrix}$ |
|---|---|---|---|
| Rank=2 | $\frac{1}{\sqrt{6}}\begin{bmatrix}1 & 1\\1 & e^{j\frac{2\pi}{3}}\\1 & e^{j\frac{4\pi}{3}}\end{bmatrix}$ | $\frac{1}{\sqrt{6}}\begin{bmatrix}1 & 1\\e^{j\frac{2\pi}{3}} & e^{j\frac{4\pi}{3}}\\e^{j\frac{4\pi}{3}} & e^{j\frac{2\pi}{3}}\end{bmatrix}=\frac{1}{\sqrt{6}}\begin{bmatrix}1 & 1\\1 & e^{j\frac{2\pi}{3}}\\1 & e^{j?\frac{2\pi}{3}}\end{bmatrix}$ | $\frac{1}{\sqrt{6}}\begin{bmatrix}1 & 1\\1 & e^{j\frac{4\pi}{3}}\\1 & e^{j\frac{2\pi}{3}}\end{bmatrix}$ |
| Rank=3 | $\frac{1}{3}\begin{bmatrix}1 & 1 & 1\\1 & e^{j\frac{2\pi}{3}} & e^{j\frac{4\pi}{3}}\\1 & e^{j\frac{4\pi}{3}} & e^{j\frac{2\pi}{3}}\end{bmatrix}$ | | |

where Rank represents the layer number of the corresponding codeword, that is, a rank of a corresponding precoding matrix. As shown in Table 1, the fully coherent codebook includes more than one codewords with 1 layer, more than one codewords with 2 layers, and one codeword with 3 layers.

In some embodiments, the partially coherent codebook may be determined based on a 2-port 1-layer fully coherent codeword and/or a 2-port 2-layer fully coherent codeword.

In some embodiments, the partially coherent codebook includes at least one of:

$$W^{(1)} = \begin{bmatrix}A_0\\0\end{bmatrix}; \quad W^{(2)} = \begin{bmatrix}A_1 & 0\\0 & A_2\end{bmatrix}; \text{ or } \quad W^{(3)} = \begin{bmatrix}A_3 & 0\\0 & A_4\end{bmatrix};$$

where $W$ denotes the codeword in the codebook, and a superscript of $W$ denotes a layer number of a corresponding codeword;

$A_0$ is any one of 2-port 1-layer fully coherent codewords;

one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;

one of $A_3$ or $A_4$ is any one of 2-port 2-layer fully coherent codewords, and the other one of $A_3$ or $A_4$ is 1.

In an example, the 2-port 1-layer fully coherent codeword includes at least one of:

$$\frac{1}{\sqrt{2}}\begin{bmatrix}1\\1\end{bmatrix}; \quad \frac{1}{\sqrt{2}}\begin{bmatrix}1\\-1\end{bmatrix}; \quad \frac{1}{\sqrt{2}}\begin{bmatrix}1\\j\end{bmatrix}; \text{ or } \quad \frac{1}{\sqrt{2}}\begin{bmatrix}1\\-j\end{bmatrix}.$$

In an example, the 2-port 2-layer fully coherent codeword includes at least one of:

$$\frac{1}{\sqrt{2}}\begin{bmatrix}1 & 1\\1 & -1\end{bmatrix}; \text{ or } \quad \frac{1}{\sqrt{2}}\begin{bmatrix}1 & 1\\j & -j\end{bmatrix}.$$

For example, the partially coherent codebook includes only the codeword with 1 layer, and the partially coherent codebook may include only a codeword corresponding to $W^{(1)} = \begin{bmatrix}A_0\\0\end{bmatrix}$. The partially coherent codebook includes only the codeword with 2 layers, and the fully coherent codebook may include a codeword corresponding to $W^{(2)} = \begin{bmatrix}A_1 & 0\\0 & A_2\end{bmatrix}$.

In an embodiment, the partially coherent codebook includes codewords with 1 layer to 3 layers, and sparse matrices of the codewords in the partially coherent codebook may be as shown in Table 2 below:

Table 2

| Rank=1 | $\begin{bmatrix} 1 \\ 1 \\ 0 \end{bmatrix}$ | $\begin{bmatrix} 1 \\ 0 \\ 1 \end{bmatrix}$ | $\begin{bmatrix} 0 \\ 1 \\ 1 \end{bmatrix}$ |
|---|---|---|---|
| Rank=2 | $\begin{bmatrix} 1 & 0 \\ 1 & 0 \\ 0 & 1 \end{bmatrix}$ | $\begin{bmatrix} 1 & 0 \\ 0 & 1 \\ 1 & 0 \end{bmatrix}$ | $\begin{bmatrix} 0 & 1 \\ 1 & 0 \\ 1 & 0 \end{bmatrix}$ |
| Rank=3 | $\begin{bmatrix} 1 & 1 & 0 \\ 1 & 1 & 0 \\ 0 & 0 & 1 \end{bmatrix}$ | $\begin{bmatrix} 1 & 1 & 0 \\ 0 & 0 & 1 \\ 1 & 1 & 0 \end{bmatrix}$ | $\begin{bmatrix} 0 & 0 & 1 \\ 1 & 1 & 0 \\ 1 & 1 & 0 \end{bmatrix}$ |
| | $\begin{bmatrix} 1 & 0 & 0 \\ 0 & 1 & 1 \\ 0 & 1 & 1 \end{bmatrix}$ | $\begin{bmatrix} 0 & 1 & 1 \\ 1 & 0 & 0 \\ 0 & 1 & 1 \end{bmatrix}$ | $\begin{bmatrix} 0 & 1 & 1 \\ 0 & 1 & 1 \\ 1 & 0 & 0 \end{bmatrix}$ |

where 1 in the sparse matrices of the codewords in the partially coherent codebook in Table 2 may be, for example, 1, -1, j or -j, which is not listed one by one in the embodiments of the present disclosure. For example, taking a sparse matrix of a codeword in the partially coherent codebook as $\begin{bmatrix} 1 \\ 1 \\ 0 \end{bmatrix}$ as an example, the 2-port 1-layer fully coherent co-

deword corresponding to $A_0$ is $\frac{1}{\sqrt{2}}\begin{bmatrix} 1 \\ -j \end{bmatrix}$, then the codeword may be specifically $\frac{1}{\sqrt{2}}\begin{bmatrix} 1 \\ -j \\ 0 \end{bmatrix}$.

In some embodiments, a codeword in the non-coherent codebook is a first matrix, and one antenna port is selected for each layer of the first matrix, and antenna ports selected for respective layers are different from each other. In an example, the first matrix may be an antenna selection matrix or an antenna selection vector.

In some embodiments, the non-coherent codebook may include a codeword corresponding to at least one of 1 layer to 3 layers. For example, the non-coherent codebook may include only the codeword with 1 layer, or may include the codewords with 1 layer and 2 layers, etc.

In some embodiments, the non-coherent codebook includes a codeword corresponding to each of 1 layer to 3 layers. With reference to Table 3 below, the non-coherent codebook may be as follows:

Table 3

| Rank=1 | $\begin{bmatrix} 1 \\ 0 \\ 0 \end{bmatrix}$ | $\begin{bmatrix} 0 \\ 1 \\ 0 \end{bmatrix}$ | $\begin{bmatrix} 0 \\ 0 \\ 1 \end{bmatrix}$ |
|---|---|---|---|
| Rank=2 | $\begin{bmatrix} 1 & 0 \\ 0 & 1 \\ 0 & 0 \end{bmatrix}$ | $\begin{bmatrix} 1 & 0 \\ 0 & 0 \\ 0 & 1 \end{bmatrix}$ | $\begin{bmatrix} 0 & 0 \\ 1 & 0 \\ 0 & 1 \end{bmatrix}$ |
| Rank=3 | $\begin{bmatrix} 1 & 0 & 0 \\ 0 & 1 & 0 \\ 0 & 0 & 1 \end{bmatrix}$ | | |

With reference to Table 3, taking the codeword $\begin{bmatrix} 1 & 0 \\ 0 & 1 \\ 0 & 0 \end{bmatrix}$ as an example, a first antenna port is selected for a first layer, that is, a first column of the matrix; and a second antenna port is selected for a second layer, that is, a second column of the matrix.

**In** some embodiments, the codeword in the partially coherent codebook and the codeword in the non-coherent codebook may be determined based on a normalization coefficient. For example, the normalization coefficient may be multiplied by a matrix designed as shown in Table 2 or Table 3 to obtain a corresponding codeword. In an example, the normalization coefficient may be obtained based on actual measurements, and a value of the normalization coefficient is not limited in the embodiments of the present disclosure. In an example, the normalization coefficient may be equal to $\frac{1}{\sqrt{M}}$ , where M is a numerical count of non-zero elements in the corresponding matrix.

For example, taking the matrix $\begin{bmatrix} 1 & 0 & 0 \\ 0 & 1 & 0 \\ 0 & 0 & 1 \end{bmatrix}$ in Table 3 as an example, a normalization coefficient corresponding to the matrix may be, for example, $\frac{1}{\sqrt{3}}$ , and then a codeword in the non-coherent codebook may be, for example, $\frac{1}{\sqrt{3}} \begin{bmatrix} 1 & 0 & 0 \\ 0 & 1 & 0 \\ 0 & 0 & 1 \end{bmatrix}$ . .

As another example, taking the matrix $\begin{bmatrix} 0 & 1 & 1 \\ 0 & 1 & 1 \\ 1 & 0 & 0 \end{bmatrix}$ in Table 2 as an example, a normalization coefficient corresponding to the matrix may be, for example, , and then a codeword in the partially coherent codebook may be $\frac{1}{\sqrt{5}} \begin{bmatrix} 0 & 1 & 1 \\ 0 & 1 & 1 \\ 1 & 0 & 0 \end{bmatrix}$ .

At step S2103, the network device sends first information to the terminal.

In some embodiments, the terminal receives the first information sent by the network device. In an example, the first information is used to instruct the terminal to precode the uplink channel.

In some embodiments, the first information indicates the first codeword in the codebook. In an example, the first codeword is used for the terminal to precode the uplink channel.

In some embodiments, the first information may be, for example, a transmission precoding matrix indicator (TPMI). For example, the network device may notify the terminal of the precoding matrix actually used for transmission, that is, the first codeword, and notify the terminal of a numerical count of transmission layers through a rank indicator (RI).

At step S2104, the terminal precodes the uplink channel according to the first codeword.

In some embodiments, the terminal may determine the corresponding first codeword from the codebook according to the first information sent by the network device, and then the terminal may perform precoding processing on the uplink channel using the determined first codeword to complete the transmission of the uplink channel.

In an example, precoding the uplink channel may specifically refer to precoding data communicated in the uplink channel. For example, precoding data communicated in a physical uplink shared channel.

At step S2105, the terminal sends the precoded uplink channel to the network device.

In some embodiments, the network device receives the precoded uplink channel sent by the terminal. In an example, the network device receives an uplink channel sent by the terminal and precoded according to the first codeword.

In some embodiments, after the terminal perform the precoding processing on the uplink channel using the first codeword, the terminal may map the precoded data to the corresponding antenna port and send the precoded uplink channel to the network device.

In some embodiments, a name of information, etc. is not limited to names mentioned in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" and the like may be used interchangeably.

In some embodiments, the terms "codebook", "codeword", "precoding matrix" and the like may be used interchangeably. For example, the codebook may be a collection of one or more codewords/precoded matrices.

In some embodiments, terms such as "uplink", "up link", "physical uplink" may be interchangeable, and terms such as "downlink", "down link", "physical downlink" may be interchangeable, and terms such as "side", "sidelink", "side communication", "sidelink communication", "direct connection", "direct link", "direct communication", "direct link communication" and the like may be interchangeable.

In some embodiments, terms "downlink control information (DCI)", "downlink (DL) assignment", "DL DCI", "uplink (UL) grant", "UL DCI" and the like may be used interchangeably.

In some embodiments, terms such as "physical downlink shared channel (PDSCH)", "DL data" and the like may be interchangeable, and terms such as "physical uplink shared channel (PUSCH)", "UL data" and the like may be interchangeable.

In some embodiments, terms such as "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", "pilot signal" and the like may be used interchangeably.

In some embodiments, the terms such as "moment", "time point", "time", "time position" and the like may be interchangeable, and the terms such as "duration", "period", "time window", "window", "time" and the like may be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like may be used interchangeably.

In some embodiments, the terms such as "wireless access scheme", "waveform", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like may be used interchangeably.

In some embodiments, the terms such as "frame", "radio frame", "subframe", "slot", "sub-slot", "mini-slot", "symbol", "symbol", "transmission time interval (TTI)" and so on may be used interchangeably.

In some embodiments, "obtain", "acquire", "get", "receive", "transmission", "bidirectional transmission", "send and/or receive" may be interchangeable, and may be interpreted as receiving from other entities, obtaining from a protocol, obtaining by self-processing, autonomous implementation, etc.

In some embodiments, the terms such as "send", "transmit", "report", "issue", "transmission", "bidirectional transmission", "send and/or receive" and the like may be used interchangeably.

In some embodiments, terms such as "certain", "preset", "predetermined", "set", "indicated", "one", "any", and "first" may be used interchangeably, and "certain A", "preset A", "predetermined A", "set A", "indicated A", "one A", "any A", and "first A" may be interpreted as A pre-defined in a protocol, etc., or as A obtained through setting, configuration, or indication, etc., or as certain A, one A, any A, or first A, etc., which is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

The information processing method in the embodiments of the present disclosure may include at least one of step S2101 to step S2105. For example, step S2102 may be implemented as an independent embodiment, step S2104 may be implemented as an independent embodiment, step S2105 may be implemented as an independent embodiment, step S2101 to step S2103 may be implemented as an independent embodiment, and step S2104 to step S2105 may be implemented as an independent embodiment, but is not limited thereto.

In some embodiments, step S2101 and step S2103 to step S2105 are optional steps, and one or more of these steps may be omitted or replaced in different embodiments.

In some embodiments, step S2101 to step S2103 and step S2105 are optional steps, and one or more of these steps may be omitted or replaced in different embodiments.

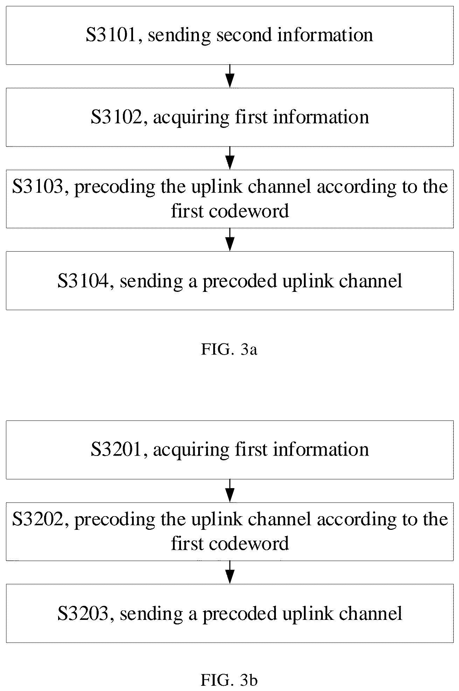

FIG. 3a is a flowchart illustrating an information processing method according to an embodiment of the present disclosure. As illustrated in FIG. 3a, this embodiment of the present disclosure relates to information processing and is performed by a terminal. The method may include the following steps.

At step 3101, second information is sent.

For the optional implementation of step S3101, reference may be made to the optional implementation of step S2101 in FIG. 2 and other related parts in the embodiment involved in FIG. 2, and details may not be repeated here.

In some embodiments, the terminal sends the second information to the network device, but is not limited thereto. The terminal may also send the second information to other entities.

In an example, the network device receives the second information sent by the terminal.

In an example, the second information may indicate a coherence type for the terminal. In an example, the coherence type for the terminal may be used for the network device to determine a first codeword. For the optional implementation thereof, reference may be made to the optional implementation of step S2102 in FIG. 2 and other related parts in the embodiment involved in FIG. 2, and details may not be repeated here.

At step S3102, first information is acquired.

For the optional implementation of step S3102, reference may be made to the optional implementation of step S2103 in FIG. 2 and other related parts in the embodiment involved in FIG. 2, and details may not be repeated here.

In some embodiments, the terminal receives the first information from the network device, but is not limited thereto. The terminal may also receive the first information from other entities.

In some embodiments, the terminal acquires the first information specified by a protocol.

In some embodiments, the terminal acquires the first information from an upper layer(s).

In some embodiments, the terminal performs processing to acquire the first information.

In some embodiments, step S3102 may be omitted, and the terminal may autonomously implement the function indicated by the first information, or the above function may be null or default.

At step S3103, an uplink channel is precoded according to the first codeword.

For the optional implementation of step S3103, reference may be made to the optional implementation of step S2104 in FIG. 2 and other related parts in the embodiment involved in FIG. 2, and details may not be repeated here.

In some embodiments, precoding the uplink channel may be implemented based on the first codeword.

At step S3104, a precoded uplink channel is sent.

For the optional implementation of step S3104, reference may be made to the optional implementation of step S2105 in FIG. 2 and other related parts in the embodiment involved in FIG. 2, and details may not be repeated here.

In some embodiments, the terminal sends the second information to the network device 102, but is not limited thereto. The terminal may also send the second information to other entities.

In an example, the network device receives the precoded uplink channel sent by the terminal. In an example, the network device receives the uplink channel sent by the terminal and precoded according to the first codeword.

The information processing method in the embodiments of the present disclosure may include at least one of step S3101 to step S3104. For example, step S3101 may be implemented as an independent embodiment, step S3103 may be implemented as an independent embodiment, step S3101 to step S3102 may be implemented as an independent embodiment, and step S3103 to step S3104 may be implemented as an independent embodiment, but is not limited thereto.

In some embodiments, step S3101 and step S3102 to step S3104 are optional steps, and one or more of these steps may be omitted or replaced in different embodiments.

In some embodiments, step S3102 to step S3104 are optional steps, and one or more of these steps may be omitted or replaced in different embodiments.

FIG. 3b is a flowchart illustrating an information processing method according to an embodiment of the present disclosure. As illustrated in FIG. 3b, this embodiment of the present disclosure relates to information processing and is performed by a terminal. The method may include the following steps.

At step S3201, first information is acquired.

For the optional implementation of step S3201, reference may be made to the optional implementations of step S2103 in FIG. 2, and step S3102 in FIG. 3a, and other related parts in the embodiment involved in FIG. 2 and FIG. 3a, and details may not be repeated here.

At step S3202, an uplink channel is precoded according to the first codeword.

For the optional implementation of step S3202, reference may be made to the optional implementations of step S2104 in FIG. 2 and step S3103 in FIG. 3a, and other related parts in the embodiment involved in FIG. 2 and FIG. 3a, and details may not be repeated here.

In some embodiments, precoding the uplink channel may be implemented based on the first codeword.

At step S3203, a precoded uplink channel is sent.

For the optional implementation of step S3203, reference may be made to the optional implementations of step S2105 in FIG. 2 and step S3104 in FIG. 3a, and other related parts in the embodiment involved in FIG. 2 and FIG. 3a, and details may not be repeated here.

In some embodiments, the antenna ports of the terminal for sending the uplink channel are configured in a single polarization arrangement.

**In** some embodiments, the codebook includes at least one of: a codeword with 1 layer, a codeword with 2 layers, or a codeword with 3 layers.

**In** some embodiments, the codebook includes at least one of: a fully coherent codebook, a partially coherent codebook, or a non-coherent codebook.

In some embodiments, a codeword in the fully coherent codebook is determined based on a DFT vector, and the DFT vector is denoted as:

$$v_l = \begin{bmatrix} 1 & e^{j\frac{2\pi l}{O_1 N_1}} & \dots & e^{j\frac{2\pi l (N_1 - 1)}{O_1 N_1}} \end{bmatrix}^T,$$

where $N_1$ denotes a numerical count of ports in a horizontal dimension and is equal to 3, $O_1$ denotes a numerical count of oversampling times in the horizontal dimension and is a pre-configured positive integer, $l$ denotes an integer greater than or equal to zero, j denotes a square root of -1, and a superscript T denotes transpose of a matrix.

In some embodiments, DFT vectors corresponding to respective layers of codewords in the fully coherent codebook are orthogonal to each other.

In some embodiments, the fully coherent codebook includes at least one of:

$$W_{i_{1,1}}^{(1)} = \frac{1}{\sqrt{P}} \begin{bmatrix} v_{i_{1,1}} \end{bmatrix};$$

$$W_{i_{1,1}, i_{1,1}+O_1}^{(2)} = \frac{1}{\sqrt{2P}} \begin{bmatrix} v_{i_{1,1}} & v_{i_{1,1}+O_1} \end{bmatrix};$$

$$W_{i_{1,1}, i_{1,1}+2O_1}^{(2)} = \frac{1}{\sqrt{2P}} \begin{bmatrix} v_{i_{1,1}} & v_{i_{1,1}+2O_1} \end{bmatrix};$$

or

$$W_{i_{1,1}, i_{1,1}+O, i_{1,1}+2O_1}^{(3)} = \frac{1}{\sqrt{3P}} \begin{bmatrix} v_{i_{1,1}} & v_{i_{1,1}+O_1} & v_{i_{1,1}+2O_1} \end{bmatrix};$$

where $W$ denotes the codeword in the codebook, a superscript of $W$ denotes a layer number of a corresponding codeword, $i_{1,1} = 0, 1, ..., N_1 O_1 - 1$, $P = N_1 N_2$ denotes a total number of ports and is equal to 3.

In some embodiments, the partially coherent codebook includes at least one of:

$$W^{(1)} = \begin{bmatrix} A_0 \\ 0 \end{bmatrix}; \quad W^{(2)} = \begin{bmatrix} A_1 & 0 \\ 0 & A_2 \end{bmatrix}; \text{ or } W^{(3)} = \begin{bmatrix} A_3 & 0 \\ 0 & A_4 \end{bmatrix};$$

where $W$ denotes the codeword in the codebook, and a superscript of $W$ denotes a layer number of a corresponding codeword;

$A_0$ is any one of 2-port 1-layer fully coherent codewords;

one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;

one of $A_3$ or $A_4$ is any one of 2-port 2-layer fully coherent codewords, and the other one of $A_3$ or $A_4$ is 1.

In some embodiments, the 2-port 1-layer fully coherent codeword includes at least one of:

$$\frac{1}{\sqrt{2}} \begin{bmatrix} 1 \\ 1 \end{bmatrix}; \quad \frac{1}{\sqrt{2}} \begin{bmatrix} 1 \\ -1 \end{bmatrix}; \quad \frac{1}{\sqrt{2}} \begin{bmatrix} 1 \\ j \end{bmatrix}; \text{ or } \frac{1}{\sqrt{2}} \begin{bmatrix} 1 \\ -j \end{bmatrix}.$$

In some embodiments, the 2-port 2-layer fully coherent codeword includes at least one of:

$$\frac{1}{\sqrt{2}}\begin{bmatrix}1 & 1 \\ 1 & -1\end{bmatrix};\ \text{or}\ \frac{1}{\sqrt{2}}\begin{bmatrix}1 & 1 \\ j & -j\end{bmatrix}.$$

**In** some embodiments, a codeword in the non-coherent codebook is a first matrix, and one antenna port is selected for each layer of the first matrix, and antenna ports selected for respective layers are different from each other.

**In** some embodiments, the method includes: sending second information to the network device, in which the second information indicates a coherence type for the terminal, and the coherence type is used for the network device to determine the first codeword.

**In** some embodiments, the coherence type is a fully coherent type, the first codeword is a codeword in the fully coherent codebook, or the first codeword is a codeword in any one of: the fully coherent codebook, the partially coherent codebook, or the non-coherent codebook; and/or the coherence type is a partially coherent type, the first codeword is a codeword in the partially coherent codebook, or the first codeword is a codeword in any one of: the partially coherent codebook or the non-coherent codebook; and/or the coherent type is a non-coherent type, and the first codeword is a codeword in the non-coherent codebook.

The information processing method in the embodiments of the present disclosure may include at least one of step S3201 to step S3203. For example, step S3201 may be implemented as an independent embodiment, step S3203 may be implemented as an independent embodiment, step S3201 to step S3202 may be implemented as an independent embodiment, and step S3202 to step S3203 may be implemented as an independent embodiment, but is not limited thereto.

In some embodiments, step S3201 to step S3202 are optional steps, and one or more of these steps may be omitted or replaced in different embodiments.

In some embodiments, step S3202 to step S3103 are optional steps, and one or more of these steps may be omitted or replaced in different embodiments.

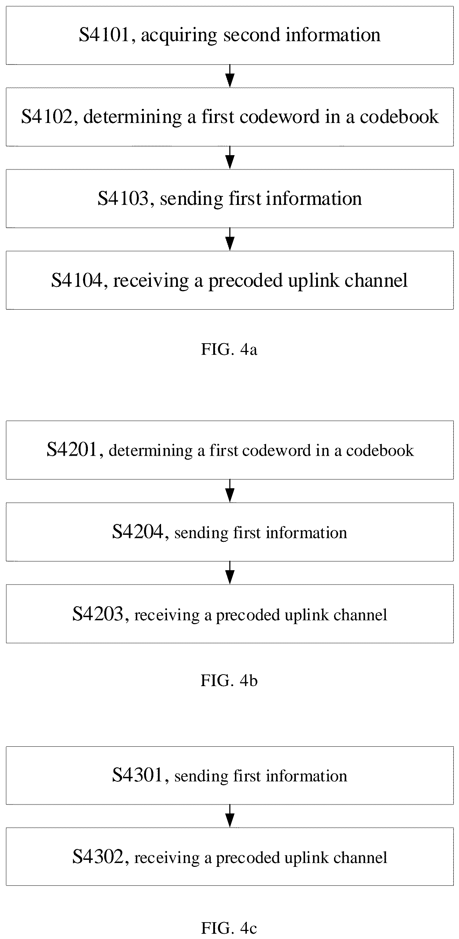

FIG. 4a is a flowchart illustrating an information processing method according to an embodiment of the present disclosure. As illustrated in FIG. 4a, this embodiment of the present disclosure relates to information processing and is performed by a network device. The method may include the following steps.

At step S4101, second information is acquired.

For the optional implementation of step S4101, reference may be made to the optional implementations of step S2101 in FIG. 2 and step S3101 in FIG. 3a, and other related parts in the embodiment involved in FIG. 2, FIG. 3a, and FIG. 3b, and details may not be repeated here.

In some embodiments, the network device receives the second information from the terminal, but is not limited thereto. The network device may also receive the second information from other entities.

In some embodiments, the network device acquires the second information specified by a protocol.

In some embodiments, the network device acquires the second information from an upper layer(s).

In some embodiments, the network device performs processing to acquire the second information.

In some embodiments, step S4101 may be omitted, and the network device may autonomously implement the function indicated by the second information, or the above function may be null or default.

At step S4102, a first codeword in a codebook is determined.

For the optional implementation of step S4102, reference may be made to the optional implementation of step S2102 in FIG. 2, and other related parts in the embodiment involved in FIG. 2, FIG. 3a, and FIG. 3b, and details may not be repeated here.

At step S4103, first information is sent.

For the optional implementation of step S4103, reference may be made to the optional implementations of step S2103 in FIG. 2, step S3102 in FIG. 3a, and step S3201 in FIG. 3b, and other related parts in the embodiment involved in FIG. 2, FIG. 3a, and FIG. 3b, and details may not be repeated here.

**In** some embodiments, the network device sends the first information to the terminal, but is not limited thereto. The network device may also send the first information to other entities.

In an example, the first information is used for the terminal to precode an uplink channel. For the optional implementation thereof, reference may be made to the optional implementations of step S2104 in FIG. 2, step S3103 in FIG. 3a, and step S3203 in FIG. 3b, and other related parts in the embodiment involved in FIG. 2, FIG. 3a, FIG. 3b, and details may not be repeated here.

At step S4104, a precoded uplink channel is received.

For the optional implementation of step S4104, reference may be made to the optional implementations of step S2105 in FIG. 2, step S3104 in FIG. 3a, and step S3203 in FIG. 3b, and other related parts in the embodiment involved in FIG. 2, FIG. 3a, and FIG. 3b, and details may not be repeated here.

In some embodiments, the precoded uplink channel sent by the terminal is received.

The information processing method in the embodiments of the present disclosure may include at least one of step S4101 to step S4104. For example, step S4101 may be implemented as an independent embodiment, step S4102 may be implemented as an independent embodiment, step S4103 may be implemented as an independent embodiment, step S4102 to step S4103 may be implemented as an independent embodiment, but is not limited thereto.

In some embodiments, step S4101 and step S4103 to step S4104 are optional steps, and one or more of these steps may be omitted or replaced in different embodiments.

In some embodiments, step S4102 to step S4104 are optional steps, and one or more of these steps may be omitted or replaced in different embodiments.

FIG. 4b is a flowchart illustrating an information processing method according to an embodiment of the present disclosure. As illustrated in FIG. 4b, this embodiment of the present disclosure relates to information processing and is performed by a network device. The method may include the following steps.

At step S4201, a first codeword in a codebook is determined.

For the optional implementation of step S4201, reference may be made to the optional implementations of step S2102 in FIG. 2 and step S4102 in FIG. 4a, and other related parts in the embodiment involved in FIG. 2, FIG. 3a, FIG. 3b, and FIG. 4a, and details may not be repeated here.

At step S4202, first information is sent.

For the optional implementation of step S4202, reference may be made to the optional implementations of step S2103 in FIG. 2 and step S4102 in FIG. 4a, and other related parts in the embodiment involved in FIG. 2, FIG. 3a, FIG. 3b, and FIG. 4a, and details may not be repeated here.

At step S4203, a precoded uplink channel is received.

For the optional implementation of step S4203, reference may be made to the optional implementations of step S2105 in FIG. 2, step S3104 in FIG. 3a, step S3203 in FIG. 3b, and step S4104 in FIG. 4a, and other related parts in the embodiment involved in FIG. 2, FIG. 3a, FIG. 3b, and FIG. 4a, and details may not be repeated here.

The information processing method in the embodiments of the present disclosure may include at least one of step S4201 to step S4203. For example, step S4201 may be implemented as an independent embodiment, step S4202 may be implemented as an independent embodiment, step S4203 may be implemented as an independent embodiment, step S4201 to step S4202 may be implemented as an independent embodiment, but is not limited thereto.

In some embodiments, step S4201 and step S4203 are optional steps, and one or more of these steps may be omitted or replaced in different embodiments.

In some embodiments, step S4202 and step S4203 are optional steps, and one or more of these steps may be omitted or replaced in different embodiments.

FIG. 4c is a flowchart illustrating an information processing method according to an embodiment of the present disclosure. As illustrated in FIG. 4c, this embodiment of the present disclosure relates to information processing and is performed by a network device. The method may include the following steps.

At step S4301, first information is sent.

For the optional implementation of step S4301, reference may be made to the optional implementations of step S2103 in FIG. 2, step S3102 in FIG. 3a, step S3201 in FIG. 3b, step S4103 in FIG. 4a, and step S4202 in FIG. 4b, and other related parts in the embodiment involved in FIG. 2, FIG. 3a, FIG. 3b, FIG. 4a and FIG. 4b, and details may not be repeated here.

At step S4302, a precoded uplink channel is received.

For the optional implementation of step S4302, reference may be made to the optional implementations of step S2105 in FIG. 2, step S3104 in FIG. 3a, step S3203 in FIG. 3b, step S4104 in FIG. 4a and step S4203 in FIG. 4b, and other related parts in the embodiment involved in FIG. 2, FIG. 3a, FIG. 3b, and FIG. 4a, and details may not be repeated here.

In some embodiments, the antenna ports of the terminal for sending the uplink channel are configured in a single polarization arrangement.

In some embodiments, the codebook includes at least one of: a codeword with 1 layer, a codeword with 2 layers, or a codeword with 3 layers.

In some embodiments, the codebook includes at least one of: a fully coherent codebook, a partially coherent codebook, or a non-coherent codebook.

In some embodiments, a codeword in the fully coherent codebook is determined based on a DFT vector, and the DFT vector is denoted as:

$$v_l = \begin{bmatrix} 1 & e^{j\frac{2\pi l}{O_1 N_1}} & ... & e^{j\frac{2\pi l(N_1-1)}{O_1 N_1}} \end{bmatrix}^T,$$

where $N_1$ denotes a numerical count of ports in a horizontal dimension and is equal to 3, $O_1$ denotes a numerical count of oversampling times in the horizontal dimension and is a pre-configured positive integer, $l$ denotes an integer greater than or equal to zero, j denotes a square root of -1, and a superscript T denotes transpose of a matrix.

In some embodiments, DFT vectors corresponding to respective layers of codewords in the fully coherent codebook are orthogonal to each other.

In some embodiments, the fully coherent codebook includes at least one of:

$$W_{i_{1,1}}^{(1)} = \frac{1}{\sqrt{P}}[v_{i_{1,1}}];$$

$$W_{i_{1,1},i_{1,1}+O_1}^{(2)} = \frac{1}{\sqrt{2P}}[v_{i_{1,1}} \quad v_{i_{1,1}+O_1}];$$

$$W_{i_{1,1},i_{1,1}+2O_1}^{(2)} = \frac{1}{\sqrt{2P}}[v_{i_{1,1}} \quad v_{i_{1,1}+2O_1}];$$

or

$$W_{i_{1,1},i_{1,1}+O,i_{1,1}+2O_1}^{(3)} = \frac{1}{\sqrt{3P}}[v_{i_{1,1}} \quad v_{i_{1,1}+O_1} \quad v_{i_{1,1}+2O_1}];$$

where $W$ denotes the codeword in the codebook, a superscript of $W$ denotes a layer number of a corresponding codeword, $i_{1,1} = 0,1, ..., N_1O_1 - 1$, $P = N_1N_2$ denotes a total number of ports and is equal to 3.

In some embodiments, the partially coherent codebook includes at least one of:

$$W^{(1)} = \begin{bmatrix} A_0 \\ 0 \end{bmatrix}; \quad W^{(2)} = \begin{bmatrix} A_1 & 0 \\ 0 & A_2 \end{bmatrix}; \quad \text{or} \quad W^{(3)} = \begin{bmatrix} A_3 & 0 \\ 0 & A_4 \end{bmatrix};$$

where $W$ denotes the codeword in the codebook, and a superscript of $W$ denotes a layer number of a corresponding codeword;

$A_0$ is any one of 2-port 1-layer fully coherent codewords;

one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;

one of $A_3$ or $A_4$ is any one of 2-port 2-layer fully coherent codewords, and the other one of $A_3$ or $A_4$ is 1.

In some embodiments, the 2-port 1-layer fully coherent codeword includes at least one of:

$$\frac{1}{\sqrt{2}}\begin{bmatrix} 1 \\ 1 \end{bmatrix}; \quad \frac{1}{\sqrt{2}}\begin{bmatrix} 1 \\ -1 \end{bmatrix}; \quad \frac{1}{\sqrt{2}}\begin{bmatrix} 1 \\ j \end{bmatrix}; \quad \text{or} \quad \frac{1}{\sqrt{2}}\begin{bmatrix} 1 \\ -j \end{bmatrix}.$$

In some embodiments, the 2-port 2-layer fully coherent codeword includes at least one of:

$$\frac{1}{\sqrt{2}}\begin{bmatrix} 1 & 1 \\ 1 & -1 \end{bmatrix}; \quad \text{or} \quad \frac{1}{\sqrt{2}}\begin{bmatrix} 1 & 1 \\ j & -j \end{bmatrix}.$$

In some embodiments, a codeword in the non-coherent codebook is a first matrix, and one antenna port is selected for each layer of the first matrix, and antenna ports selected for respective layers are different from each other.

In some embodiments, the method includes: sending second information to the network device, in which the second information indicates a coherence type for the terminal, and the coherence type is used for the network device to determine the first codeword.

In some embodiments, the coherence type is a fully coherent type, the first codeword is a codeword in the fully coherent codebook, or the first codeword is a codeword in any one of: the fully coherent codebook, the partially coherent codebook, or the non-coherent codebook; and/or the coherence type is a partially coherent type, the first codeword is a codeword in the partially coherent codebook, or the first codeword is a codeword in any one of: the partially coherent codebook or the non-coherent codebook; and/or the coherent type is a non-coherent type, and the first codeword is a codeword in the non-coherent codebook.

The information processing method in the embodiments of the present disclosure may include at least one of step S4201 to step S4203. For example, step S4201 may be implemented as an independent embodiment, step S4202 may be implemented as an independent embodiment, or step S4203 may be implemented as an independent embodiment, but is not limited thereto.

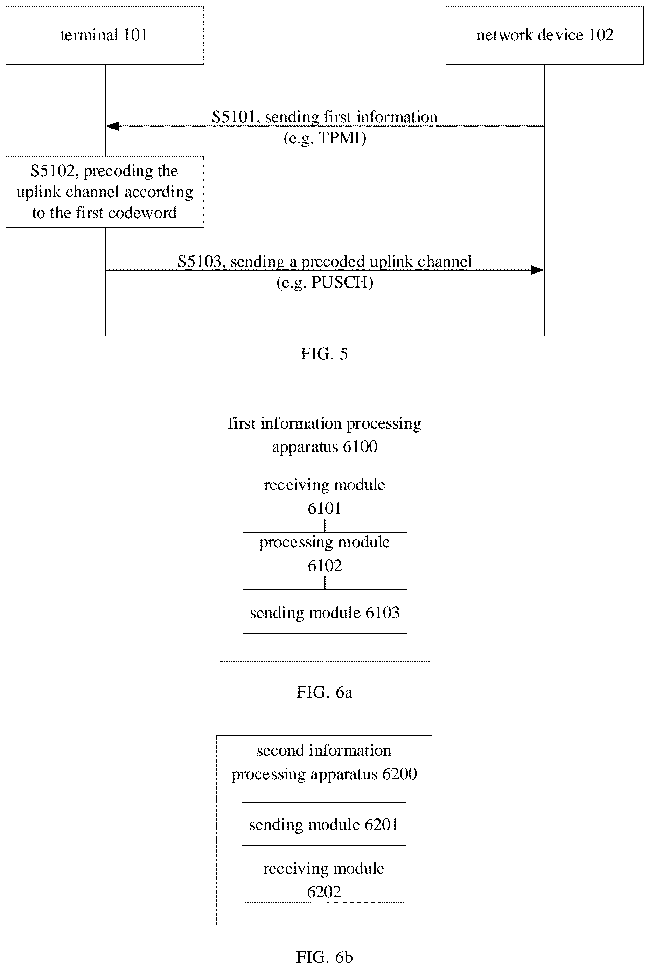

FIG. 5 is a flowchart illustrating an information processing method according to an embodiment of the present disclosure. As illustrated in FIG. 5, this embodiment of the present disclosure relates to the information processing method and is configured in a communication system 100. The method may include the following steps.

At step S5101, a network device sends first information to a terminal.

For the optional implementation of step S5101, reference may be made to the optional implementations of step S2103 in FIG. 2, step S3102 in FIG. 3a, step S3201 in FIG. 3b, step S4103 in FIG. 4a, step S4202 in FIG. 4b, and step S4301 in FIG. 4c, and other related parts in the embodiments involved in FIG. 2, FIG. 3a, FIG. 3b, FIG. 4a, FIG. 4b and FIG. 4c, and details may not be repeated here.

At step S5102, the terminal precodes an uplink channel according to a first codeword.

For the optional implementation of step S5102, reference may be made to the optional implementations of step S2104 in FIG. 2, step S3103 in FIG. 3a, and step S3202 in FIG. 3b, and other related parts in the embodiments involved in FIG. 2, FIG. 3a, FIG. 3b, FIG. 4a, FIG. 4b and FIG. 4c, and details may not be repeated here.

At step S5103, the terminal sends a precoded uplink channel to the network device.

For the optional implementation of step S5103, reference may be made to the optional implementations of step S21053 in FIG. 2, step S3104 in FIG. 3a, step S3203 in FIG. 3b, step S4104 in FIG. 4a, step S4203 in FIG. 4b, and step S4301 in FIG. 4c, and other related parts in the embodiments involved in FIG. 2, FIG. 3a, FIG. 3b, FIG. 4a, FIG. 4b and FIG. 4c, and details may not be repeated here.

The information processing method in the embodiments of the present disclosure may include at least one of step S5101 to step S5103. For example, step S5101 may be implemented as an independent embodiment, step S5102 may be implemented as an independent embodiment, step S5103 may be implemented as an independent embodiment, step S5102 to step S5103 may be implemented as an independent embodiment, but is not limited thereto.

In some embodiments, step S5102 and step S5103 are optional steps, and one or more of these steps may be omitted or replaced in different embodiments.

In some embodiments, step S5101 and step S5103 are optional steps, and one or more of these steps may be omitted or replaced in different embodiments.

Based on the same inventive concept, embodiments of the present disclosure also provide the following codebook design scheme.

In some embodiments, a fully coherent codebook, a partially coherent codebook, and a non-coherent codebook may be designed for an uplink 3-port terminal.

In some embodiments, for a fully coherent codebook, parameters are defined as follows: N1 denotes a numerical count of ports in a horizontal dimension, i.e., N1=3;

N2 denotes a numerical count of ports in a vertical dimension, i.e., N2 = 1;
O1 denotes a numerical count of oversampling times in the horizontal dimension, which may be flexibly configured, such as 1 or 2 or 3 or 4;
O2 denotes a numerical count of oversampling times in the vertical dimension, i.e., O2=1;
P denotes a numerical count of ports, i.e., P = N1*N2;
v denotes a DFT vector

$$v_l = \begin{bmatrix} 1 & e^{j\frac{2\pi l}{O_1 N_1}} & ... & e^{j\frac{2\pi l(N_1-1)}{O_1 N_1}} \end{bmatrix}^T.$$

In some embodiments, for the fully coherent codebook, the codebook may be designed as follows.

When Rank=1, the codebook is designed as $W_{i_{1,1}}^{(1)} = \frac{1}{\sqrt{P}}\begin{bmatrix} v_{i_{1,1}} \end{bmatrix}$ , where $i_{1,1}$ = 0,1, ..., $N_1 O_1$ - 1.

When Rank=2, the codebook is designed as $W_{i_{1,1},i_{1,1}+O_1}^{(2)} = \frac{1}{\sqrt{2P}}\begin{bmatrix} v_{i_{1,1}} & v_{i_{1,1}+O_1} \end{bmatrix}$ , where $i_{1,1}$ = 0,1,..., $N_1 O_1$ -1; and/or the codebook is designed as $W_{i_{1,1},i_{1,1}+2O_1}^{(2)} = \frac{1}{\sqrt{2P}}\begin{bmatrix} v_{i_{1,1}} & v_{i_{1,1}+2O_1} \end{bmatrix}$ , where $i_{1,1}$ = 0,1, ... , $N_1 O_1$ - 1.

When Rank=3, the codebook is designed as $W_{i_{1,1},i_{1,1}+O,i_{1,1}+2O_1}^{(3)} = \frac{1}{\sqrt{3P}}\begin{bmatrix} v_{i_{1,1}} & v_{i_{1,1}+O_1} & v_{i_{1,1}+2O_1} \end{bmatrix}$ , where $i_{1,1}$ = 0,1, ... , $N_1 O_1$ - 1.

For example, when the numerical count O1 of oversampling times in the horizontal dimension is set as 1, the fully coherent codebook may be shown in the following table.

| Rank=1 | $\begin{bmatrix} 1 \\ 1 \\ 1 \end{bmatrix}$ | $\begin{bmatrix} 1 \\ e^{j\frac{2\pi}{3}} \\ e^{j\frac{4\pi}{3}} \end{bmatrix}$ | $\begin{bmatrix} 1 \\ e^{j\frac{4\pi}{3}} \\ e^{j\frac{2\pi}{3}} \end{bmatrix}$ |
|---|---|---|---|
| Rank=2 | $\begin{bmatrix} 1 & 1 \\ 1 & e^{j\frac{2\pi}{3}} \\ 1 & e^{j\frac{4\pi}{3}} \end{bmatrix}$ | $\begin{bmatrix} 1 & 1 \\ e^{j\frac{2\pi}{3}} & e^{j\frac{4\pi}{3}} \\ e^{j\frac{4\pi}{3}} & e^{j\frac{2\pi}{3}} \end{bmatrix} = \begin{bmatrix} 1 & 1 \\ 1 & e^{j\frac{2\pi}{3}} \\ 1 & e^{j\frac{?2\pi}{3}} \end{bmatrix}$ | $\begin{bmatrix} 1 & 1 \\ 1 & e^{j\frac{4\pi}{3}} \\ 1 & e^{j\frac{2\pi}{3}} \end{bmatrix}$ |
| Rank=3 | $\begin{bmatrix} 1 & 1 & 1 \\ 1 & e^{j\frac{2\pi}{3}} & e^{j\frac{4\pi}{3}} \\ 1 & e^{j\frac{4\pi}{3}} & e^{j\frac{2\pi}{3}} \end{bmatrix}$ | | |

In some embodiments, for the partially coherent codebook, port group division may be performed as follows.

For example, 3 ports may be divided into two antenna port groups, such as, port group #1 includes 2 ports, and port group #2 includes 1 port; or port group #1 includes 1 port, and port group #2 includes 2 ports.

In some embodiments, for the partially coherent codebook, the codebook structure may be as follows.

When Rank=1, $W = \begin{bmatrix} A \\ 0 \end{bmatrix}$ , where A is a 2-port 1-layer fully coherent codeword.

When Rank=2, $W = \begin{bmatrix} A_1 & 0 \\ 0 & A_2 \end{bmatrix}$ , where A1 is the 2-port 1-layer fully coherent codeword and A2 is 1, or A1 is 1 and A2 is the 2-port 1-layer fully coherent codeword.

When Rank=3, $W = \begin{bmatrix} A_1 & 0 \\ 0 & A_2 \end{bmatrix}$ , where A1 is a 2-port 2-layer fully coherent codeword and A2 is 1, or A1 is 1 and A2 is the 2-port 2-layer fully coherent codeword.

For example, coefficient matrices of an uplink 3-port partially coherent codebook may be shown in the following table.

| Rank=1 | $\begin{bmatrix} 1 \\ 1 \\ 0 \end{bmatrix}$ | $\begin{bmatrix} 1 \\ 0 \\ 1 \end{bmatrix}$ | $\begin{bmatrix} 0 \\ 1 \\ 1 \end{bmatrix}$ |
|---|---|---|---|
| Rank=2 | $\begin{bmatrix} 1 & 0 \\ 1 & 0 \\ 0 & 1 \end{bmatrix}$ | $\begin{bmatrix} 1 & 0 \\ 0 & 1 \\ 1 & 0 \end{bmatrix}$ | $\begin{bmatrix} 0 & 1 \\ 1 & 0 \\ 1 & 0 \end{bmatrix}$ |
| Rank=3 | $\begin{bmatrix} 1 & 1 & 0 \\ 1 & 1 & 0 \\ 0 & 0 & 1 \end{bmatrix}$ | $\begin{bmatrix} 1 & 1 & 0 \\ 0 & 0 & 1 \\ 1 & 1 & 0 \end{bmatrix}$ | $\begin{bmatrix} 0 & 0 & 1 \\ 1 & 1 & 0 \\ 1 & 1 & 0 \end{bmatrix}$ |
| | $\begin{bmatrix} 1 & 0 & 0 \\ 0 & 1 & 1 \\ 0 & 1 & 1 \end{bmatrix}$ | $\begin{bmatrix} 0 & 1 & 1 \\ 1 & 0 & 0 \\ 0 & 1 & 1 \end{bmatrix}$ | $\begin{bmatrix} 0 & 1 & 1 \\ 0 & 1 & 1 \\ 1 & 0 & 0 \end{bmatrix}$ |

In some embodiments, for the non-coherent codebook, the codebook design may be shown in the following table.

| Rank=1 | $\begin{bmatrix} 1 \\ 0 \\ 0 \end{bmatrix}$ | $\begin{bmatrix} 0 \\ 1 \\ 0 \end{bmatrix}$ | $\begin{bmatrix} 0 \\ 0 \\ 1 \end{bmatrix}$ |
|---|---|---|---|
| Rank=2 | $\begin{bmatrix} 1 & 0 \\ 0 & 1 \\ 0 & 0 \end{bmatrix}$ | $\begin{bmatrix} 1 & 0 \\ 0 & 0 \\ 0 & 1 \end{bmatrix}$ | $\begin{bmatrix} 0 & 0 \\ 1 & 0 \\ 0 & 1 \end{bmatrix}$ |
| Rank=3 | $\begin{bmatrix} 1 & 0 & 0 \\ 0 & 1 & 0 \\ 0 & 0 & 1 \end{bmatrix}$ | | |

In some embodiments, before the network device configures a first codeword for the terminal according to the above codebook, the terminal may report its own coherence type, and the network device configures codewords with different coherence characteristics according to the coherence type reported by the terminal.

In some embodiments, for a fully coherent terminal, the network device may configure a fully coherent codeword, a partially coherent codeword, and a non-coherent codeword. For a partially coherent terminal, the network device may configure the partially coherent codeword, and the non-coherent codeword. For a non-coherent terminal, the network device may configure the non-coherent codeword.

In other embodiments, for the fully coherent terminal, the network device may configure the fully coherent codeword; for the partially coherent terminals, the network device may configure the partially coherent codeword; for the non-coherent terminal, the network device may configure the non-coherent codeword.

In some embodiments, for the non-coherent codebook and the partially coherent codebook, a normalization coefficient may be multiplied by the codeword designed above, but the normalization coefficient may be any value, which is most likely to be $\frac{1}{\sqrt{M}}$, where M is a numerical count of non-zero elements in a corresponding matrix, for example, a normalization coefficient of $\begin{bmatrix} 1 \\ 1 \\ 0 \end{bmatrix}$ may be $\frac{1}{\sqrt{2}}$, but is not limited to this value.

In the embodiments of the present disclosure, part or all of the steps and their optional implementations may be arbitrarily combined with part or all of the steps in other embodiments, or may be arbitrarily combined with optional implementations of other embodiments.

The embodiments of the present disclosure also propose an apparatus for implementing any of the above methods. For example, an apparatus is proposed, the above apparatus includes units for implementing various steps performed by the terminal in any of the above methods. For another example, an apparatus is proposed, including units for implementing various steps performed by a network device (such as a receiver, a transmitter, a perception target, an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses may be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 6a is a schematic diagram illustrating an architecture of a first information processing apparatus according to an embodiment of the present disclosure. As shown in FIG. 6a, the first information processing apparatus 6100 includes a receiving module 6101, a processing module 6102 and a sending module 6103.

The receiving module 6101 is configured to receive first information sent by a network device, in which the first information indicates a first codeword in a codebook, the codebook is a codebook corresponding to a numerical count of antenna ports for sending an uplink channel by a terminal, and the numerical count of antenna ports of the terminal for sending the uplink channel is 3.

The processing module 6102 is configured to precode the uplink channel according to the first codeword.

The sending module 6103 is configured to send a precoded uplink channel to the network device.

In an example, the receiving module 6101 is used to execute the steps related to information acquisition executed by the terminal in any of the above methods, and details are not repeated here. In an example, the processing module 6102 is used to execute the steps related to information processing executed by the terminal in any of the above methods, and details are not repeated here. In an example, the sending module 6103 is used to execute the steps related to information sending executed by the terminal in any of the above methods, and details are not repeated here.

FIG. 6b is a schematic diagram illustrating an architecture of a second information processing apparatus according to an embodiment of the present disclosure. As shown in FIG. 6b, the second information processing apparatus 6200 includes a sending module 6201 and a receiving module 6202.

The sending module 6201 is configured to send first information to a terminal, in which the first information indicates a first codeword in a codebook, the codebook is a codebook corresponding to a numerical count of antenna ports of the terminal for sending an uplink channel, and the numerical count of antenna ports of the terminal for sending the uplink channel is 3.

The receiving module 6202 is configured to receive an uplink channel sent by the terminal and precoded according to the first codeword.

In an example, the sending module 6201 is used to execute the steps related to information sending executed by the network device in any of the above methods, and details are not repeated here. In an example, the receiving module 6202 is used to execute the steps related to information receiving executed by the network device in any of the above methods, and details are not repeated here. In an example, the second information processing apparatus 6200 includes a processing module. The processing module is used to execute the steps related to information processing executed by the network device in any of the above methods, and details are not repeated here.

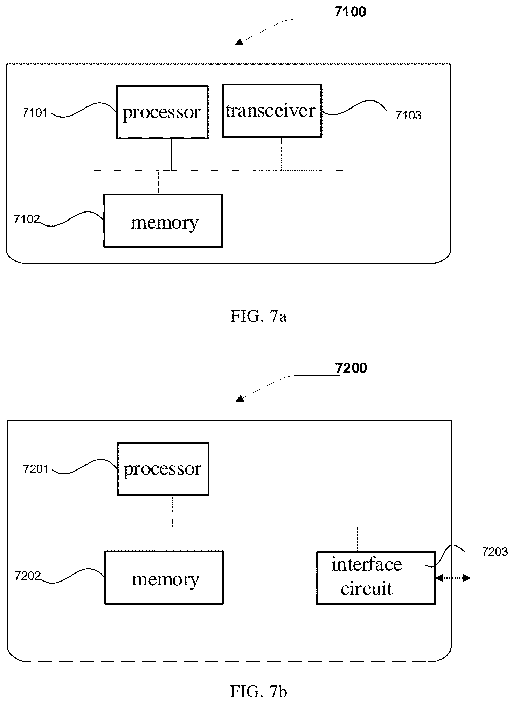

FIG. 7a is a schematic diagram of a communication device 7100 proposed in an embodiment of the present disclosure. The communication device 7100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and for details, reference may be made to the description in the above method embodiments.

As shown in FIG. 7a, the communication device 7100 includes one or more processors 7101. The processor 7101 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 7101 is used to call instructions so that the communication device 7100 executes any of the above methods.

In some embodiments, the communication device 7100 further includes one or more memories 7102 for storing instructions. In an example, all or part of the memory 7102 may be outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, the transceiver may include a receiver and a transmitter, and the receiver and the transmitter may be separate or integrated. In an example, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In an example, the communication device 7100 further includes one or more interface circuits 7104, which are connected to the memory 7102. The interface circuit 7104 may be used to receive signals from the memory 7102 or other apparatuses, and may be used to send signals to the memory 7102 or other apparatuses. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 8a. The communication device may be an independent device or may be part of a larger device. For example, the communication device may be: 1) an independent integrated circuit (IC), or a chip, or a chip system or subsystem; (2) a collection of one or more ICs, In an example, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (8) others, etc. FIG. 7b is a schematic diagram of a chip 7200 proposed in an embodiment of the present disclosure. In case where the communication device 7100 may be a chip or a chip system, reference may be made to the schematic diagram of the chip 7200 shown in FIG. 7b, but the present disclosure is not limited thereto.

FIG. 7b is a schematic diagram of a chip 7200 proposed in an embodiment of the present disclosure. In case where the communication device 7100 may be a chip or a chip system, reference may be made to the schematic diagram of the chip 7200 shown in FIG. 7b, but the present disclosure is not limited thereto.

The chip 7200 includes one or more processors 7201, and the processor 7201 is used to call instructions so that the chip 7200 executes any of the above methods.

In some embodiments, the chip 7200 further includes one or more interface circuits 7202, which are connected to the memory 7203. The interface circuit 7202 may be used to receive signals from the memory 7203 or other apparatuses, and the interface circuit 7202 may be used to send signals to the memory 7203 or other apparatuses. For example, the interface circuit 7202 may read instructions stored in the memory 7203 and send the instructions to the processor 7201. In an example, the terms such as "interface circuit", "interface", "transceiver pin", and "transceiver" may be exchangeable with each other.

In some embodiments, the chip 7200 further includes one or more memories 7203 for storing instructions. In an example, all or part of the memory 7203 may be outside the chip 7200.

The present disclosure also proposes a storage medium, on which instructions are stored, and when the instructions are executed on the communication device 7100, the communication device 7100 executes any of the above methods. In an example, the storage medium is an electronic storage medium. In an example, the storage medium is a computer-readable storage medium, but is not limited to thereto, and it may also be a storage medium readable by other apparatuses. In an example, the storage medium may be a non-transitory storage medium, but is not limited to thereto, and it can also be a temporary storage medium.

The present disclosure also proposes a program product, which, when executed by the communication device 7100, enables the communication device 7100 to execute any of the above methods. In an example, the program product is a computer program product.

The present disclosure also proposes a computer program, which, when executed on a computer, causes the computer to execute any one of the above methods.

## Claims

1. An information processing method, performed by a terminal, comprising:

receiving first information sent by a network device, wherein the first information indicates a first codeword in a codebook, the codebook is a codebook corresponding to a numerical count of antenna ports of the terminal for sending an uplink channel, and the numerical count of antenna ports of the terminal for sending the uplink channel is 3;
precoding the uplink channel according to the first codeword; and
sending a precoded uplink channel to the network device.

2. The method according to claim 1, wherein the antenna ports of the terminal for sending the uplink channel are configured in a single polarization arrangement.

3. The method according to claim 1 or 2, wherein the codebook comprises at least one of: a codeword with 1 layer, a codeword with 2 layers, or a codeword with 3 layers.

4. The method according to any one of claims 1 to 3, wherein the codebook comprises at least one of: a fully coherent codebook, a partially coherent codebook, or a non-coherent codebook.

5. The method according to claim 4, wherein a codeword in the fully coherent codebook is determined based on a discrete Fourier transform (DFT) vector, and the DFT vector is denoted as:

$$v_l = \begin{bmatrix} 1 & e^{j\frac{2\pi l}{O_1 N_1}} & \dots & e^{j\frac{2\pi l(N_1-1)}{O_1 N_1}} \end{bmatrix}^T,$$

where $N_1$ denotes a numerical count of ports in a horizontal dimension and is equal to 3, $O_1$ denotes a numerical count of oversampling times in the horizontal dimension and is a pre-configured positive integer, $l$ denotes an integer greater than or equal to zero, $j$ denotes a square root of -1, and a superscript T denotes transpose of a matrix.

6. The method according to claim 5, wherein DFT vectors corresponding to respective layers of codewords in the fully coherent codebook are orthogonal to each other.

7. The method according to claim 6, wherein the fully coherent codebook comprises at least one of:

$$W_{i_{1,1}}^{(1)} = \frac{1}{\sqrt{P}} \begin{bmatrix} v_{i_{1,1}} \end{bmatrix};$$

$$W_{i_{1,1},i_{1,1}+O_1}^{(2)} = \frac{1}{\sqrt{2P}} \begin{bmatrix} v_{i_{1,1}} & v_{i_{1,1}+O_1} \end{bmatrix};$$

$$W_{i_{1,1},i_{1,1}+2O_1}^{(2)} = \frac{1}{\sqrt{2P}} \begin{bmatrix} v_{i_{1,1}} & v_{i_{1,1}+2O_1} \end{bmatrix};$$

or

$$W_{i_{1,1},i_{1,1}+O,i_{1,1}+2O_1}^{(3)} = \frac{1}{\sqrt{3P}} \begin{bmatrix} v_{i_{1,1}} & v_{i_{1,1}+O_1} & v_{i_{1,1}+2O_1} \end{bmatrix};$$

where $W$ denotes the codeword in the codebook, a superscript of $W$ denotes a layer number of a corresponding codeword, $i_{1,1} = 0,1, ..., N_1 O_1 - 1$, $P = N_1 N_2$ denotes a total number of ports and is equal to 3.

8. The method according to any one of claims 4 to 7, wherein the partially coherent codebook comprises at least one of:

$$W^{(1)} = \begin{bmatrix} A_0 \\ 0 \end{bmatrix}; \quad W^{(2)} = \begin{bmatrix} A_1 & 0 \\ 0 & A_2 \end{bmatrix}; \quad \text{or} \quad W^{(3)} = \begin{bmatrix} A_3 & 0 \\ 0 & A_4 \end{bmatrix};$$

where $W$ denotes the codeword in the codebook, and a superscript of $W$ denotes a layer number of a corresponding codeword;
$A_0$ is any one of 2-port 1-layer fully coherent codewords;
one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;
one of $A_3$ or $A_4$ is any one of 2-port 2-layer fully coherent codewords, and the other one of $A_3$ or $A_4$ is 1.

9. The method according to claim 8, wherein the 2-port 1-layer fully coherent codeword comprises at least one of:

$$\frac{1}{\sqrt{2}}\begin{bmatrix}1\\1\end{bmatrix}; \quad \frac{1}{\sqrt{2}}\begin{bmatrix}1\\-1\end{bmatrix}; \quad \frac{1}{\sqrt{2}}\begin{bmatrix}1\\j\end{bmatrix}; \text{ or } \quad \frac{1}{\sqrt{2}}\begin{bmatrix}1\\-j\end{bmatrix}.$$

10. The method according to claim 8 or 9, wherein the 2-port 2-layer fully coherent codeword comprises at least one of:

$$\frac{1}{\sqrt{2}}\begin{bmatrix}1 & 1\\1 & -1\end{bmatrix}; \text{ or } \quad \frac{1}{\sqrt{2}}\begin{bmatrix}1 & 1\\j & -j\end{bmatrix}.$$

11. The method according to any one of claims 4 to 10, wherein a codeword in the non-coherent codebook is a first matrix, and one antenna port is selected for each layer of the first matrix, and antenna ports selected for respective layers are different from each other.

12. The method according to any one of claims 4 to 11, comprising:
sending second information to the network device, wherein the second information indicates a coherence type for the terminal, and the coherence type is used for the network device to determine the first codeword.

13. The method according to claim 12, wherein

the coherence type is a fully coherent type, the first codeword is a codeword in the fully coherent codebook, or the first codeword is a codeword in any one of: the fully coherent codebook, the partially coherent codebook, or the non-coherent codebook; and/or
the coherence type is a partially coherent type, the first codeword is a codeword in the partially coherent codebook, or the first codeword is a codeword in any one of: the partially coherent codebook or the non-coherent codebook; and/or
the coherent type is a non-coherent type, and the first codeword is a codeword in the non-coherent codebook.

14. An information processing method, performed by a network device, comprising:

sending first information to a terminal, wherein the first information indicates a first codeword in a codebook, the codebook is a codebook corresponding to a numerical count of antenna ports of the terminal for sending an uplink channel, and the numerical count of antenna ports of the terminal for sending the uplink channel is 3; and
receiving an uplink channel sent by the terminal and precoded according to the first codeword.

15. The method according to claim 14, wherein the antenna ports of the terminal for sending the uplink channel are configured in a single polarization arrangement.

16. The method according to claim 14 or 15, wherein the codebook comprises at least one of: a codeword with 1 layer, a codeword with 2 layers, or a codeword with 3 layers.

17. The method according to any one of claims 14 to 16, wherein the codebook comprises at least one of: a fully coherent codebook, a partially coherent codebook, or a non-coherent codebook.

18. The method according to claim 17, wherein a codeword in the fully coherent codebook is determined based on a discrete Fourier transform (DFT) vector, and the DFT vector is denoted as:

$$v_l = \begin{bmatrix}1 & e^{j\frac{2\pi l}{O_1 N_1}} & \dots & e^{j\frac{2\pi l(N_1-1)}{O_1 N_1}}\end{bmatrix}^T,$$

where $N_1$ denotes a numerical count of ports in a horizontal dimension and is equal to 3, $O_1$ denotes a numerical count of oversampling times in the horizontal dimension and is a preconfigured positive integer, $l$ denotes an integer greater than or equal to zero, $j$ denotes a square root of -1, and a superscript T denotes transpose of a matrix.

19. The method according to claim 18, wherein DFT vectors corresponding to respective layers of codewords in the fully coherent codebook are orthogonal to each other.

20. The method according to claim 18, wherein the fully coherent codebook comprises at least one of:

$$W_{i_{1,1}}^{(1)} = \tfrac{1}{\sqrt{P}}\left[v_{i_{1,1}}\right];$$

$$W_{i_{1,1},i_{1,1}+O_1}^{(2)} = \tfrac{1}{\sqrt{2P}}\left[v_{i_{1,1}} \quad v_{i_{1,1}+O_1}\right];$$

$$W_{i_{1,1},i_{1,1}+2O_1}^{(2)} = \tfrac{1}{\sqrt{2P}}\left[v_{i_{1,1}} \quad v_{i_{1,1}+2O_1}\right];$$

or

$$W_{i_{1,1},i_{1,1}+O,i_{1,1}+2O_1}^{(3)} = \tfrac{1}{\sqrt{3P}}\left[v_{i_{1,1}} \quad v_{i_{1,1}+O_1} \quad v_{i_{1,1}+2O_1}\right];$$

where W denotes the codeword in the codebook, a superscript of W denotes a layer number of a corresponding codeword, $i_{1,1} = 0,1, ..., N_1O_1 - 1$, $P = N_1N_2$ denotes a total number of ports and is equal to 3.

21. The method according to any one of claims 17 to 20, wherein the partially coherent codebook comprises at least one of:

$$W^{(1)} = \begin{bmatrix} A_0 \\ 0 \end{bmatrix}; \ W^{(2)} = \begin{bmatrix} A_1 & 0 \\ 0 & A_2 \end{bmatrix}; \text{ or } W^{(3)} = \begin{bmatrix} A_3 & 0 \\ 0 & A_4 \end{bmatrix};$$

where $W$ denotes the codeword in the codebook, and a superscript of $W$ denotes a layer number of a corresponding codeword;
$A_0$ is any one of 2-port 1-layer fully coherent codewords;
one of $A_1$ or $A_2$ is any one of the 2-port 1-layer fully coherent codewords, and the other one of $A_1$ or $A_2$ is 1; or one of $A_1$ or $A_2$ is any one of the 2-port 1-layer fully coherent codewords, and the other one of $A_1$ or $A_2$ is 0;
one of $A_3$ or $A_4$ is any one of 2-port 2-layer fully coherent codewords, and the other one of $A_3$ or $A_4$ is 1.

22. The method according to claim 21, wherein the 2-port 1-layer fully coherent codeword comprises at least one of:

$$\tfrac{1}{\sqrt{2}}\begin{bmatrix} 1 \\ 1 \end{bmatrix}; \ \tfrac{1}{\sqrt{2}}\begin{bmatrix} 1 \\ -1 \end{bmatrix}; \ \tfrac{1}{\sqrt{2}}\begin{bmatrix} 1 \\ j \end{bmatrix}; \text{ or } \tfrac{1}{\sqrt{2}}\begin{bmatrix} 1 \\ -j \end{bmatrix}.$$

23. The method according to claim 21 or 22, wherein the 2-port 2-layer fully coherent codeword comprises at least one of:

$$\tfrac{1}{\sqrt{2}}\begin{bmatrix} 1 & 1 \\ 1 & -1 \end{bmatrix}; \text{ or } \tfrac{1}{\sqrt{2}}\begin{bmatrix} 1 & 1 \\ j & -j \end{bmatrix}.$$

24. The method according to any one of claims 17 to 23, wherein a codeword in the non-coherent codebook is a first matrix, and one antenna port is selected for each layer of the first matrix, and antenna ports selected for respective layers are different from each other.

25. The method according to any one of claims 14 to 24, comprising:

receiving second information sent by the terminal, wherein the second information indicates a coherent type for the terminal; and
determining the first codeword according to the coherence type.

26. The method according to claim 25, wherein

the coherence type is a fully coherent type, the first codeword is a codeword in the fully coherent codebook, or the first codeword is a codeword in any one of: the fully coherent codebook, the partially coherent codebook, or the non-coherent codebook; and/or

the coherence type is a partially coherent type, the first codeword is a codeword in the partially coherent codebook, or the first codeword is a codeword in any one of: the partially coherent codebook or the non-coherent codebook; and/or

the coherent type is a non-coherent type, and the first codeword is a codeword in the non-coherent codebook.

27. An information processing method, configured in a communication system comprising a terminal and a network device, comprising:

sending, by the network device, first information to a terminal, wherein the first information indicates a first codeword in a codebook, the codebook is a codebook corresponding to a numerical count of antenna ports of the terminal for sending an uplink channel, and the numerical count of antenna ports of the terminal for sending the uplink channel is 3;

precoding, by the terminal, the uplink channel according to the first codeword; and

sending, by the terminal, a precoded uplink channel to the network device.

28. A first information processing apparatus, comprising:

a receiving module, configured to receive first information sent by a network device, wherein the first information indicates a first codeword in a codebook, the codebook is a codebook corresponding to a numerical count of antenna ports for sending an uplink channel by a terminal, and the numerical count of antenna ports of the terminal for sending the uplink channel is 3;

a processing module, configured to precode the uplink channel according to the first codeword; and

a sending module, configured to send a precoded uplink channel to the network device.

29. A second information processing apparatus, comprising:

a sending module, configured to send first information to a terminal, wherein the first information indicates a first codeword in a codebook, the codebook is a codebook corresponding to a numerical count of antenna ports of the terminal for sending an uplink channel, and the numerical count of antenna ports of the terminal for sending the uplink channel is 3; and

a receiving module, configured to receive an uplink channel sent by the terminal and precoded according to the first codeword.

30. A communication device, comprising:

one or more processors;

wherein the one or more processors are configured to call instructions to enable the communication device to perform the information processing method according to any one of claims 1 to 13 or 14 to 26.

31. A communication system, comprising a terminal and a network device, wherein the terminal is configured to implement the information processing method according to any one of claims 1 to 13, and the network device is configured to implement the information processing method according to any one of claims 14 to 26.

32. A storage medium storing instructions which, when running on a communication device, cause the communication device to perform the information processing method according to any one of claims 1 to 13, or the information processing method according to any one of claims 14 to 26.

Communication system 100

Terminal 101 — Network device 102

FIG. 1a

0　　1　　2

FIG. 1b

terminal 101　　　　　　　　　network device 102

S2101, sending second information
(e.g., including a coherence type of the
terminal)

S2102, determining a first
codeword in a codebook

S2103, sending first information
(e.g. TPMI)

S2104, precoding the
uplink channel according
to the first codeword

S2105, sending a precoded uplink channel
(e.g. PUSCH)

FIG. 2

S3101, sending second information

↓

S3102, acquiring first information

↓

S3103, precoding the uplink channel according to the first codeword

↓

S3104, sending a precoded uplink channel

FIG. 3a

S3201, acquiring first information

↓

S3202, precoding the uplink channel according to the first codeword

↓

S3203, sending a precoded uplink channel

FIG. 3b

S4101, acquiring second information

↓

S4102, determining a first codeword in a codebook

↓

S4103, sending first information

↓

S4104, receiving a precoded uplink channel

FIG. 4a

S4201, determining a first codeword in a codebook

↓

S4204, sending first information

↓

S4203, receiving a precoded uplink channel

FIG. 4b

S4301, sending first information

↓

S4302, receiving a precoded uplink channel

FIG. 4c

| terminal 101 | | network device 102 |

S5101, sending first information
(e.g. TPMI)

S5102, precoding the
uplink channel according
to the first codeword

S5103, sending a precoded uplink channel
(e.g. PUSCH)

FIG. 5

first information processing
apparatus 6100

receiving module
6101

processing module
6102

sending module 6103

FIG. 6a

second information
processing apparatus 6200

sending module 6201

receiving module
6202

FIG. 6b

**7100**

FIG. 7a

**7200**

FIG. 7b

# INTERNATIONAL SEARCH REPORT

| International application No. |
|---|
| **PCT/CN2023/099011** |

## A. CLASSIFICATION OF SUBJECT MATTER

H04B7/0456(2017.01)i

According to International Patent Classification (IPC) or to both national classification and IPC

## B. FIELDS SEARCHED

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT; WOTXT; USTXT; EPTXT; CNABS; VEN; DWPI; CNKI; IEEE; ISI; 3GPP: 波束, 单极化, 端口, 多输入多输出, 码本, 单数, 奇数, 三, 上行, 天线, 相干, MIMO, multiple input multiple output, beam, port, codebook, odd, singular, 2n+1, triple, uplink, antenna, coherent.

## C. DOCUMENTS CONSIDERED TO BE RELEVANT

| Category* | Citation of document, with indication, where appropriate, of the relevant passages | Relevant to claim No. |
|---|---|---|
| X | CN 115997350 A (BEIJING XIAOMI MOBILE SOFTWARE CO., LTD.) 21 April 2023 (2023-04-21) description, paragraphs [0004]-[0272] | 1-32 |
| X | CN 102299764 A (CHINA ACADEMY OF TELECOMMUNICATIONS TECHNOLOGY) 28 December 2011 (2011-12-28) description, paragraphs [0031]-[0046] | 1-32 |
| A | CN 112751598 A (HUAWEI TECHNOLOGIES CO., LTD.) 04 May 2021 (2021-05-04) entire document | 1-32 |
| A | WO 2023029032 A1 (QUALCOMM INC. et al.) 09 March 2023 (2023-03-09) entire document | 1-32 |
| A | WO 2023048469 A1 (SAMSUNG ELECTRONICS CO., LTD.) 30 March 2023 (2023-03-30) entire document | 1-32 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2024** | **06 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/099011** |

| Patent document cited in search report | | | Publication date (day/month/year) | Patent family member(s) | | | Publication date (day/month/year) |
|---|---|---|---|---|---|---|---|
| CN | 115997350 | A | 21 April 2023 | None | | | |
| CN | 102299764 | A | 28 December 2011 | CN | 102299764 | B | 16 April 2014 |
| CN | 112751598 | A | 04 May 2021 | WO | 2021083157 | A1 | 06 May 2021 |
| | | | | CN | 112751598 | B | 06 May 2021 |
| WO | 2023029032 | A1 | 09 March 2023 | None | | | |
| WO | 2023048469 | A1 | 30 March 2023 | US | 2023148388 | A1 | 11 May 2023 |

Form PCT/ISA/210 (patent family annex) (July 2022)